(19) Europäisches Patentamt
European Patent Office
Office européen des brevets

(11) **EP 3 354 367 B1**

(12) **EUROPÄISCHE PATENTSCHRIFT**

(45) Veröffentlichungstag und Bekanntmachung des Hinweises auf die Patenterteilung:
**17.07.2019  Patentblatt 2019/29**

(21) Anmeldenummer: **17153826.7**

(22) Anmeldetag: **30.01.2017**

(51) Int Cl.:
**B22C 1/00** (2006.01)    **B22D 11/116** (2006.01)
**B03C 1/28** (2006.01)    **B03C 1/24** (2006.01)
**B03C 1/32** (2006.01)    **C22B 9/00** (2006.01)
**C22B 21/06** (2006.01)    **B22D 1/00** (2006.01)

(54) **VORRICHTUNG UND VERFAHREN ZUR REINIGUNG EINER ELEKTRISCH LEITENDEN FLÜSSIGKEIT VON NICHTLEITENDEN VERUNREINIGUNGEN**

DEVICE AND METHOD FOR CLEANING AN ELECTRICALLY CONDUCTIVE LIQUID OF NON-CONDUCTIVE IMPURITIES

DISPOSITIF ET PROCÉDÉ DESTINÉ À RETIRER LES IMPURETÉS NON CONDUCTRICES DANS UN LIQUIDE ÉLECTROCONDUCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.08.2018  Patentblatt 2018/31**

(73) Patentinhaber: **Hydro Aluminium Rolled Products GmbH**
**41515 Grevenbroich (DE)**

(72) Erfinder:
• BUCHHOLZ, Andreas
  53359 Rheinbach (DE)
• FURU, Jørgen
  6460 Eidsvåg i Romsdal (NO)
• CHANDIA, Muhammed Umar Farooq
  Mesaieed Industrial City (QA)

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
EP-A1- 1 913 991    CN-A- 1 363 699
CN-Y- 2 760 044    DE-A1-102007 038 281
NL-C2- 1 009 031    US-A1- 2008 216 601

**Beschreibung**

Die Erfindung betrifft eine Vorrichtung zur Reinigung einer elektrisch leitenden Flüssigkeit, insbesondere einer Metallschmelze, von nichtleitenden Verunreinigungen mit einem von einer elektrisch leitenden Flüssigkeit durchströmbaren Kanal, mit einer um den Kanal angeordneten Spulenanordnung, die mehrere Spulen aufweist, und mit einer Elektronik, um die Spulen der Spulenanordnung im Betrieb mit elektrischen Strömen zu beaufschlagen. Die Erfindung betrifft weiterhin ein Verfahren zur Reinigung einer elektrisch leitenden Flüssigkeit von nichtleitenden Verunreinigungen in einem von der Flüssigkeit durchströmten Kanal, insbesondere unter Verwendung der zuvor genannten Vorrichtung, bei dem in dem Kanal ein erstes durch den Kanal laufendes elektromagnetisches Wanderfeld erzeugt wird.

Die Nutzung elektromagnetischer Felder zur Reinigung metallischer Schmelzen ist grundsätzlich bekannt. Nach den Grundlagen der Elektrodynamik induzieren magnetische Wechselfelder in Leitern und elektrisch leitfähigen Flüssigkeiten Ströme, die mit dem Magnetfeld eine Lorentzkraft erzeugen. Bei einer zylindrischen stromführenden Spule um einen zylindrischen Kanal mit einer elektrisch leitfähigen Flüssigkeit sind diese Lorentzkräfte im Wesentlichen zur Zylinderachse gerichtet.

Auf in der leitfähigen Flüssigkeit befindliche nichtleitenden Partikel, z.B. oxidische Einschlüsse, wirken diese Lorentzkäfte nicht. Stattdessen erzeugen die Lorentzkräfte um ein nichtleitendes Partikel ein hydrostatisches Druckfeld, dass dieses nach außen drängt. Studien und analytische Betrachtungen (vgl. z.B. V.M. Korovin in Magnetohydrodynamics, Vol. 24, No. 2, 160-165, 1988) haben ergeben, dass diese hydrostatische Kraft typischerweise etwa bei dem -0.75-fachen der Lorentzkraft der vom Körper verdrängten Schmelze liegt.

Es ist bekannt, diesen als Leenov-Kolin-Effekt bezeichneten Effekt zu nutzen, um nicht- oder schlechtleitende Verunreinigungen aus Schmelzen zu entfernen, indem die Schmelze durch eine zylindrische Spule geführt wird, die mit einem einphasigen Wechselstrom gespeist wird. Die Schmelze kann bedingt durch die Wandung des Rohres, in dem die Schmelze geführt wird, und durch die Symmetrie des Kraftfeldes der Lorentzkraft nicht folgen, während die nicht-bzw. schlechtleitenden Partikel durch die hydrostatische Kraft zur Wand des Rohres gedrückt werden.

Die Dokumente EP 1913991 A1, NL 1009031 C2 und US 2008/0216601 A1 offenbaren Vorrichtungen und Verfahren gemäß dem Oberbegriff der Ansprüche 1 und 11.

Die Abscheidung der Partikel an der Wand kann dadurch erhöht werden, dass die Schmelze in der Spule durch einen keramischen Körper geführt wird, der im Wesentlichen aus einem Röhrenbündel besteht. Dadurch wir die effektive Oberfläche erhöht, an der sich die Partikel abscheiden können.

Diese Technik hat zwei wesentliche Nachteile: Die Kanäle in den verwendeten Keramikkörpern sind relativ dünn und setzen sich mit der Zeit zu, so dass diese ausgetauscht werden müssen. Weiterhin ändert sich durch die Filter die Durchflussrate. Diese muss durch ein entsprechendes Druckgefälle von außen eingestellt werden.

Der vorliegenden Erfindung liegt die Aufgabe zu Grunde, eine Vorrichtung und ein Verfahren zur Reinigung einer elektrisch leitenden Flüssigkeit, insbesondere einer Metallschmelze, zur Verfügung zu stellen, mit dem nichtleitende Verunreinigungen effektiv entfernt werden können und die zuvor beschriebenen Nachteile zumindest teilweise vermieden werden.

Diese Aufgabe wird bei einer Vorrichtung zur Reinigung einer elektrisch leitenden Flüssigkeit mit einem von einer elektrisch leitenden Flüssigkeit durchströmbaren Kanal, mit einer um den Kanal angeordneten Spulenanordnung, die mehrere Spulen aufweist, und mit einer Elektronik, um die Spulen der Spulenanordnung im Betrieb mit elektrischen Strömen zu beaufschlagen, erfindungsgemäß dadurch gelöst, dass die Elektronik dazu eingerichtet ist, mehrere Spulen der Spulenanordnung im Betrieb derart mit elektrischen Strömen zu beaufschlagen, dass in dem Kanal ein erstes in Kanalrichtung durch den Kanal laufendes elektromagnetisches Wanderfeld erzeugt wird und dass in dem Kanal zusätzlich zu dem ersten elektromagnetischen Wanderfeld ein zweites in Kanalrichtung durch den Kanal laufendes elektromagnetisches Wanderfeld erzeugt wird.

Weiterhin wird die oben genannte Aufgabe bei einem Verfahren zur Reinigung einer elektrisch leitenden Flüssigkeit in einem von der Flüssigkeit durchströmten Kanal, insbesondere unter Verwendung der zuvor beschriebenen Vorrichtung bzw. einer Ausführungsform davon, bei dem in dem Kanal ein erstes in Kanalrichtung durch den Kanal laufendes elektromagnetisches Wanderfeld erzeugt wird, erfindungsgemäß dadurch gelöst, dass in dem Kanal zusätzlich zu dem ersten elektromagnetischen Wanderfeld ein zweites in Kanalrichtung durch den Kanal laufendes elektromagnetisches Wanderfeld erzeugt wird.

Es wurde erkannt, dass die Erzeugung zweier elektromagnetischer Wanderfelder im Kanal eine Beeinflussung der Strömung der Flüssigkeit im Kanal erlaubt, durch die die durch den Leenov-Kolin-Effekt erreichte Reinigung der Flüssigkeit verbessert werden kann.

Bei der Vorrichtung ist die Elektronik vorzugsweise dazu eingerichtet, mehrere Spulen der Spulenanordnung im Betrieb derart mit elektrischen Strömen zu beaufschlagen, dass als erstes in Kanalrichtung durch den Kanal laufendes elektromagnetisches Wanderfeld ein elektromagnetisches Wanderfeld mit einer ersten Grundfrequenz erzeugt wird und dass als zweites in Kanalrichtung durch den Kanal laufendes elektromagnetisches Wanderfeld ein elektromagnetisches Wanderfeld mit einer gegenüber der ersten Grundfrequenz höheren zweiten Grundfrequenz erzeugt wird. Vorzugsweise werden das erste Wanderfeld mit der ersten Grundfrequenz und das zweite Wanderfeld mit der zweiten Grundfrequenz im gleichen Kanalabschnitt des Kanals erzeugt. Die Spulen der Spulenanordnung können im Betrieb beispielsweise mit sinusförmig modulierten elektrischen Strömen beaufschlagt werden.

Bei dem Verfahren wird vorzugsweise entsprechend als erstes in Kanalrichtung durch den Kanal laufendes elektromagnetisches Wanderfeld ein elektromagnetisches Wanderfeld mit einer ersten Grundfrequenz und als zweites in Kanalrichtung durch den Kanal laufendes elektromagnetisches Wanderfeld ein elektromagnetisches Wanderfeld mit einer gegenüber der ersten Grundfrequenz höheren zweiten Grundfrequenz erzeugt. Vorzugsweise werden das erste Wanderfeld mit der ersten Grundfrequenz und das zweite Wanderfeld mit der zweiten Grundfrequenz im gleichen Kanalabschnitt des Kanals erzeugt.

Insbesondere wurde erkannt, dass durch die Überlagerung zweier elektromagnetischer Wanderfelder mit verschiedenen Grundfrequenzen zwei verschiedene Strömungsbereiche der Flüssigkeit im Kanal eingestellt werden können, und zwar ein in Bezug auf den Kanalquerschnitt innenliegender erster Strömungsbereich und ein in Bezug auf den Kanalquerschnitt weiter außen, im Bereich der Kanalwandung liegender zweiter Strömungsbereich.

Da nichtleitende Verunreinigungen durch den Leenov-Kolin-Effekt im Kanal nach außen transportiert werden, gelangen diese aus dem ersten in den zweiten Strömungsbereich und können durch die Strömung im zweiten Strömungsbereich gezielt abtransportiert werden, während mit der Strömung im ersten Strömungsbereich der Transport der leitfähigen Flüssigkeit durch den Kanal sichergestellt wird, so dass eine übermäßige Reduzierung der Durchflussrate oder ein Zusetzen des Kanals verhindert werden kann.

Die Einstellung der Strömungen im ersten bzw. zweiten Strömungsbereich durch das Beaufschlagen der Spulen mit elektrischen Strömen erfolgt dadurch, dass das durch die Ströme erzeugte erste bzw. zweite magnetische Wanderfeld in die elektrisch leitfähige Flüssigkeit eindringt und dort elektrische Ströme induziert, die wiederum mit dem elektromagnetischen Feld wechselwirken, so dass sich eine Lorentzkraft ergibt, die auf die elektrisch leitfähige Flüssigkeit wirkt und so deren Strömung beeinflusst.

Es wurde erkannt, dass sich durch Ausnutzung des Skineffekts und die Beschränkung der Wellenlänge eines Wanderfelds die Strömung in zwei verschiedenen Strömungsbereichen einstellen lässt. Die Durchdringung der leitfähigen Flüssigkeit durch das elektromagnetische Feld und die in der Flüssigkeit induzierten Wirbelströme sind durch den Skineffekt beschränkt, so dass die durch die induzierten Wirbelströme hervorgerufenen Lorentzkräfte nur bis zu einer bestimmten Eindringtiefe in der Flüssigkeit auftreten. Diese Eindringtiefe ist eine Funktion der Leitfähigkeit der Flüssigkeit und der Frequenz des Felds bzw. des Stromes, mit dem die Spulen zur Erzeugung der Wanderfelder beaufschlagt werden. Dieser Skineffekt ist für kurze Wellenlängen des Wanderfelds zudem noch verstärkt, da das magnetische Streufeld durch die Wellenlänge des Wanderfelds begrenzt wird. Indem die beiden Wanderfelder vorzugsweise verschiedene Grundfrequenzen aufweisen, werden entsprechend verschiedene Eindringtiefen für die beiden Wanderfelder erreicht, wobei das erste Wanderfeld mit der geringeren Grundfrequenz tiefer in die leitfähige Flüssigkeit eindringt als das zweite Wanderfeld mit der höheren Grundfrequenz.

Dadurch lässt sich über das erste Wanderfeld der weiter innen im Kanal liegende erste Strömungsbereich beeinflussen, während sich durch das zweite Wanderfeld vor allem der weiter außen liegende zweite Strömungsbereich beeinflussen lässt. Damit können die Strömungen in den beiden Strömungsbereichen unabhängig voneinander beeinflusst bzw. eingestellt werden.

Die Vorrichtung dient zur Reinigung einer elektrisch leitfähigen Flüssigkeit und ist insbesondere hierzu eingerichtet. Insbesondere kann die Vorrichtung zur Reinigung einer Metallschmelze eingerichtet sein, wobei die mit der Metallschmelze in Kontakt kommenden Teile der Vorrichtung, insbesondere die Wandung des Kanals, zu diesem Zweck derart beschaffen sind, dass sie den Temperaturen einer Metallschmelze widerstehen können. Bei der Metallschmelze kann es sich insbesondere um eine Aluminiumschmelze handeln.

Die Vorrichtung und das Verfahren dienen zur Reinigung der elektrisch leitenden Flüssigkeit von nichtleitenden Verunreinigungen. Unter nichtleitenden Verunreinigungen werden vorliegend Verunreinigungen verstanden, die gegenüber der elektrisch leitfähigen Metallschmelze einen erheblich höheren elektrischen Widerstand aufweisen. Bei den nichtleitenden Verunreinigungen kann es sich beispielsweise um oxidische Partikel handeln, die häufig als Verunreinigung in Metallschmelzen, insbesondere Aluminiumschmelzen, vorkommen.

Die Vorrichtung weist einen von einer elektrisch leitenden Flüssigkeit durchströmbaren Kanal auf. Vorzugsweise weist der Kanal einen geschlossenen Querschnitt auf. Beispielsweise kann der Kanal durch ein Rohr gebildet werden, durch welches die elektrisch leitende Flüssigkeit geführt wird. Vorzugsweise weist der Kanal einen im Wesentlichen kreisförmigen Querschnitt auf. Die Kanalwandung ist vorzugsweise nichtleitend, so dass das von der Spulenanordnung erzeugte elektromagnetische Feld gut in das Innere des Kanals eindringen kann. Für die Kanalwandung kommt daher insbesondere ein keramischer Werkstoff in Frage, der einerseits nichtleitend ist und andererseits hohen thermischen und chemischen Belastungen, beispielsweise durch eine durch den Kanal fließende Metallschmelze, standhält.

Nachfolgend wird die Erstreckungsrichtung des Kanals auch als axiale Richtung, die Richtung entlang des Querschnittumfangs des Kanals als azimutale Richtung und die Richtung vom Querschnittsmittelpunkt des Kanals zur Kanalwandung als radiale Richtung bezeichnet. Unter der axialen, azimutalen bzw. radialen Komponente einer (Lorentz-)Kraft wird entsprechend der Anteil (bzw. die Projektion) der Kraft in die entsprechende Richtung verstanden. Dies entspricht im Prinzip einer Darstellung der Kraft in Zylindergeometrie.

Die Vorrichtung weist weiterhin eine um den Kanal angeordnete Spulenanordnung auf, die mehrere Spulen aufweist. Die Spulen sind insbesondere um den Kanal gewickelt, um ein elektromagnetisches Wechselfeld im Kanal erzeugen zu können. Eine Spule kann mehrere Teilspulen aufweisen, die in axialer Richtung des Kanals zueinander versetzt sind. Jede Teilspule kann zudem mehrere Windungen aufweisen. Die mehreren Spulen sind vorzugsweise so angeordnet, dass die einzelnen Teilspulen zweier Spulen in Erstreckungsrichtung des Kanals gegeneinander versetzt sind. Bei den Spulen handelt es sich vorzugsweise um zylindrische Spulen, deren axiale Achse vorzugsweise parallel zur axialen Achse des Kanals liegt. Auf diese Weise heben sich radiale Lorentzkraft-Komponenten im Wesentlichen auf, so dass es - abgesehen vom Leenov-Kolin-Effekt - zu keinen radialen Strömungen der Flüssigkeit kommt.

Die Vorrichtung weist weiterhin eine Elektronik auf, um die Spulen der Spulenanordnung im Betrieb mit elektrischen Strömen zu beaufschlagen. Insbesondere ist die Elektronik hierzu eingerichtet. Die Elektronik kann vollständig analog oder auch zumindest teilweise digital ausgebildet sein.

Die Elektronik ist dazu eingerichtet, mehrere Spulen der Spulenanordnung im Betrieb derart mit elektrischen Strömen zu beaufschlagen, dass in dem Kanal ein erstes in Kanalrichtung durch den Kanal laufendes elektromagnetisches Wanderfeld, insbesondere mit einer ersten Grundfrequenz, erzeugt wird und dass in dem Kanal zusätzlich zu dem ersten elektromagnetischen Wanderfeld ein zweites in Kanalrichtung durch den Kanal laufendes elektromagnetisches Wanderfeld, vorzugsweise mit einer gegenüber der ersten Grundfrequenz höheren zweiten Grundfrequenz, erzeugt wird.

Unter einem elektromagnetischen Wanderfeld wird ein elektromagnetisches Feld verstanden, bei dem die Maxima des elektrischen bzw. magnetischen Felds in Erstreckungsrichtung des Kanals durch diesen hindurch wandern. Zur Erzeugung eines solchen Wanderfelds können mehrere in Erstreckungsrichtung des Kanals zueinander versetzte Spulen der Spulenanordnung mit elektrischen Strömen unterschiedlicher Phasenlage beaufschlagt werden, insbesondere mit Strömen eines Mehrphasenstroms. Beispielsweise können drei oder mehr zueinander versetzte Spulen mit Strömen beaufschlagt werden, wobei sich die Phasenlage der Ströme benachbarter Spulen um einen festen Phasenwinkel kleiner 180°, insbesondere kleiner 90°, unterscheidet.

Insbesondere kann die Elektronik einen Mehrphasenumrichter umfassen. Beispielsweise können die typischen drei Phasen U, V, W eines Mehrphasenumrichters mit einer Phasenverschiebung von jeweils 120° in der Reihenfolge U, -W, V, -U, W, -V kombiniert werden, so dass sich sechs aufeinanderfolgende Phasen mit einer Verschiebung von jeweils 60° ergeben. Diese Phasenfolge wird bei mehr als sechs Spulen wiederholt.

Zur Erzeugung des ersten und des zweiten elektromagnetischen Wanderfelds können dieselben Spulen oder auch verschiedene Spulen der Spulenanordnung mit Strömen beaufschlagt werden.

Unter der Grundfrequenz wird die fundamentale Schwingungsfrequenz des Stroms verstanden, mit dem das betreffende Wanderfeld erzeugt wird.

Im Folgenden werden verschiedene Ausführungsformen der Vorrichtung und des Verfahrens beschrieben, wobei die einzelnen Ausführungsformen jeweils für die Vorrichtung und das Verfahren anwendbar sind. Die Ausführungsformen können zudem miteinander kombiniert werden.

Bei einer ersten Ausführungsform werden die Spulen der Spulenanordnung im Betrieb derart mit elektrischen Strömen beaufschlagt, dass das erste Wanderfeld eine Förderung der Flüssigkeit durch den Kanal bewirkt. Dies kann insbesondere dadurch erreicht werden, dass die durch das erste Wanderfeld induzierte Lorentzkraft im zeitlichen Mittel eine stärkere Komponente in axialer Richtung des Kanals aufweist als in radialer Richtung. Auf diese Weise wird ein ausreichender Vortrieb der leitfähigen Flüssigkeit durch den Kanal sichergestellt, so dass der Kanal nicht verstopft. Dies ist insbesondere dann relevant, wenn es sich bei der leitfähigen Flüssigkeit um eine Metallschmelze handelt, da diese bei zu langer Aufenthaltszeit im Rohr abkühlen und erstarren kann.

Bei einer Ausführungsform werden die Spulen der Spulenanordnung im Betrieb derart mit elektrischen Strömen beaufschlagt, dass das zweite Wanderfeld eine zur Mitte des Kanals gerichtete Kraft auf die Flüssigkeit bewirkt. Dies kann insbesondere dadurch erreicht werden, dass die durch das zweite Wanderfeld induzierte Lorentzkraft im zeitlichen Mittel eine stärkere Komponente in radialer Richtung des Kanals aufweist als in axialer Richtung. Auf diese Weise wird der Druck im Inneren des Kanals erhöht und dadurch der Leenov-Kolin-Effekt verstärkt, der die nichtleitenden Verunreinigungen im Kanal nach außen transportiert. Dadurch ist eine effektivere Reinigung möglich.

Bei einer Ausführungsform ist die Elektronik dazu eingerichtet, die Spulen der Spulenanordnung derart zu beaufschlagen, dass das erste Wanderfeld und das zweite Wanderfeld in entgegengesetzten Richtungen durch den Kanal laufen. Bei einer entsprechenden Ausführungsform des Verfahrens laufen das erste Wanderfeld und das zweite Wanderfeld in entgegengesetzten Richtungen durch den Kanal.

Die Richtung eines Wanderfelds kann insbesondere über die Phasendifferenz der phasenversetzten Ströme eingestellt werden, mit denen zur Erzeugung des Wanderfelds in axialer Richtung zueinander versetzt angeordnete Spulen beaufschlagt werden. Damit kann die entgegensetzte Wanderrichtung der beiden Wanderfelder insbesondere dadurch erreicht werden, dass die Ströme benachbarter Spulen für das erste Wanderfeld positive und für das zweite Wanderfeld negative Phasendifferenzen aufweisen.

Weist das zweite Wanderfeld eine gegenüber dem ersten Wanderfeld höhere Grundfrequenz auf, so wird durch die entgegengesetzten Richtungen der beiden Wanderfelder erreicht, dass das zweite magnetische Wanderfeld die Förderung der Flüssigkeit im Randbereich des Kanals derart beeinflusst, dass die Flüssigkeit im Randbereich des Kanals und damit der in diesen Bereich transportierten nichtleitenden Verunreinigungen entgegen der Hauptförderrichtung weiter innen im Kanal gefördert wird. Dies erlaubt eine effektivere Trennung der verunreinigungsärmeren Flüssigkeit in der Mitte des Kanals von der stärker verunreinigten Flüssigkeit im Randbereich.

Die Phasendifferenz zwischen Strömen benachbarter Spulen zur Erzeugung des ersten Wanderfelds kann beispielsweise 60° betragen, so dass z.B. die einzelnen zueinander versetzten Spulen bei insgesamt sechs Spulen Phasendifferenzen zur ersten Spule (0°) von 60°, 120°, 180°, 240° und 300° aufweisen.

Bei einer Ausführungsform umfasst eine Spule eine erste Windung, die im Uhrzeigersinn um den Kanal gelegt ist, und eine zweite Windung, die in Kanalerstreckungsrichtung (axialer Richtung) beabstandet von der ersten Windung gegen den Uhrzeigersinn um den Kanal gelegt ist. Insbesondere umfasst die Spule eine erste Teilspule mit im Uhrzeigersinn um den Kanal gelegten Windungen und eine zweite, von der ersten in axialer Richtung beabstandete Teilspule mit gegen den Uhrzeigersinn um den Kanal gelegten Windungen. Auf diese Weise können durch eine Spule zwei Phasen, nämlich mit der eigentlichen Phasenlage und mit der Gegenphasenlage (+180°) realisiert werden. Auf diese Weise können zum Beispiel mit nur drei Spulen (0°, 60°, 120°) insgesamt sechs Phasenlagen (0°, 60°, 120°, 180°, 240°, 300°) erreicht werden.

Die Phasendifferenz zwischen Strömen benachbarter Spulen zur Erzeugung des zweiten Wanderfelds kann z.B. ebenfalls 60° oder auch weniger als 60° betragen.

Die Stromstärke der Ströme, mit denen die Spulen beaufschlagt werden, kann bei mehreren hundert Ampère, z.B. bei bis zu 500 A, liegen. Weiterhin weist eine Spule oder, bei Spulen mit mehreren Teilspulen, eine Teilspule einer Spule vorzugsweise mehrere, insbesondere zwischen 5 und 30 Windungen auf.

Bei einer Ausführungsform der Vorrichtung bzw. des Verfahrens liegt die Grundfrequenz für das erste elektromagnetische Wanderfeld im Bereich 1 bis 1000 Hz, vorzugsweise 1 - 200 Hz, insbesondere 10 - 100 Hz und die Grundfrequenz für das zweite elektromagnetische Wanderfeld im Bereich 30 - 20.000 Hz, vorzugsweise 30 - 500 Hz. Durch die geringere Grundfrequenz des ersten elektromagnetischen Wanderfelds dringt dieses tief in die im Kanal geführte Flüssigkeit ein und beeinflusst damit die Strömung in der Mitte des Kanals. Durch die höhere Grundfrequenz des zweiten elektromagnetischen Wanderfelds ist dessen Eindringtiefe recht gering, so dass es nur nah an der Kanalwandung wirkt. Die zuvor genannten Frequenzbereiche haben sich besonders bei der Reinigung von Metallschmelzen, insbesondere Aluminiumschmelzen als geeignet herausgestellt.

Bei einer Ausführungsform sind die Spulenanordnungen und die Elektronik derart eingerichtet, dass das Produkt aus der Quadratwurzel der Frequenz des ersten Wanderfelds und der Wellenlänge des ersten Wanderfelds kleiner ist als das Produkt aus der Quadratwurzel der Frequenz des zweiten Wanderfelds und der Wellenlänge des zweiten Wanderfelds. Es wurde erkannt, dass die zeitlich gemittelte Richtung der durch ein Wanderfeld erzeugten Lorentzkräfte von dem Produkt aus der Quadratwurzel der Frequenz und der Wellenlänge eines Wanderfelds abhängt. Für kleinere Werte des Produkts dominiert die axiale Komponente der Lorentzkraft, während für größere Werte des Produkts die radiale Komponente der Lorentzkraft überwiegt. Durch die Einrichtung der Spulenanordnung und der Elektronik abhängig von dieser Kenngröße kann im ersten Strömungsbereich eine große axiale Komponente der Lorentzkraft erreicht werden, die einen zuverlässigen Transport der Flüssigkeit durch den Kanal sicherstellt, und im zweiten Strömungsbereich eine große radiale Komponente der Lorentzkraft erreicht werden, die die Abführung der nichtleitenden Verunreinigungen in den Randbereich und damit die Reinigung der Flüssigkeit in der Kanalquerschnittsmitte verbessert.

Damit wird ein niederfrequentes erstes Wanderfeld mit hoher Eindringtiefe und stärkerer Förderwirkung mit einem höherfrequenten Wanderfeld mit niedriger Eindringtiefe und stärkerer Filterwirkung im Kanalwandungsbereich überlagert.

Unter der Wellenlänge eines Wanderfelds wird die räumliche Länge einer Wanderfeldperiode in axialer Richtung verstanden. Diese ergibt sich aus dem Abstand der Spulen bzw. Teilspulen einer Spule, die mit gleichphasigem Strom beaufschlagt werden. Weisen die Ströme durch in axialer Richtung benachbarte Spulen beispielsweise jeweils eine Phasendifferenz von 60° auf, so sind die Ströme der 1., 7., 13. Spule etc. gleichphasig. Die Wellenlänge des Wanderfelds entspricht dann dem räumlichen Abstand zwischen der 1. und 7. Spule.

Bei einer Ausführungsform beträgt die Phasendifferenz zwischen Strömen benachbarter Spulen zur Erzeugung des zweiten Wanderfelds weniger als 60°, insbesondere einen ganzzahligen Bruchteil von 60°. Auf diese Weise werden größere Wellenlängen des zweiten Wanderfelds erreicht.

Bei einer Ausführungsform ist die Elektronik dazu eingerichtet, mehrere Spulen der Spulenanordnung im Betrieb derart mit elektrischen Strömen zu beaufschlagen, dass stromabwärts des ersten magnetischen Wanderfelds ein drittes durch den Kanal laufendes elektromagnetisches Wanderfeld erzeugt wird, wobei das erste Wanderfeld und das dritte Wanderfeld in entgegengesetzten Richtungen durch den Kanal laufen. Bei einer entsprechenden Ausführungsform des Verfahrens wird stromabwärts des ersten magnetischen Wanderfelds ein drittes durch den Kanal laufendes elektromagnetisches Wanderfeld erzeugt, wobei das erste Wanderfeld und das dritte Wanderfeld in entgegengesetzten Richtungen durch den Kanal laufen. Auf diese Weise wird die im ersten Strömungsbereich strömende Flüssigkeit durch das dritte Wanderfeld abgebremst, so dass die Verweilzeit der Flüssigkeit im Kanal bzw. innerhalb des ersten und zweiten Wanderfelds beeinflusst, insbesondere verlängert werden kann. Dadurch ist eine effektivere Reinigung möglich.

Stromabwärts des ersten magnetischen Wanderfelds bedeutet, dass das dritte Wanderfeld in einem Bereich erzeugt wird, der zu dem Bereich, in dem das erste Wanderfeld erzeugt wird, in Erstreckungsrichtung des Kanals versetzt ist, und zwar in der Richtung, in der das erste magnetische Wanderfeld durch den Kanal läuft und entsprechend auch die Strömung im Inneren des Kanals fließt.

Das dritte Wanderfeld weist vorzugsweise im Wesentlichen die gleiche Grundfrequenz auf wie das erste Wanderfeld, so dass das dritte Wanderfeld eine vergleichbare Eindringtiefe hat wie das erste Wanderfeld und die Strömung im ersten Strömungsbereich beeinflusst.

Bei einer Ausführungsform kann das zweite Wanderfeld stromabwärts des ersten magnetischen Wanderfelds erzeugt werden, wobei das erste Wanderfeld und das zweite Wanderfeld in entgegengesetzten Richtungen durch den Kanal laufen. Bei einer entsprechenden Ausführungsform des Verfahrens wird stromabwärts des ersten magnetischen Wanderfelds das zweite durch den Kanal laufende elektromagnetische Wanderfeld erzeugt, wobei das erste Wanderfeld und das zweite Wanderfeld in entgegengesetzten Richtungen durch den Kanal laufen. Bei dieser Ausführungsform werden das erste und das zweite Wanderfeld also in verschiedenen Kanalabschnitten erzeugt. Die Grundfrequenz des ersten Wanderfelds kann bei dieser Ausführungsform mit der Grundfrequenz des zweiten Wanderfelds übereinstimmen.

Es wurde erkannt, dass sich durch die Erzeugung derartiger erste und zweiter Wanderfelder ebenfalls eine verbesserte Reinigungswirkung für die Flüssigkeit ergibt, auch ohne dass in einem Kanalabschnitt zwei Wanderfelder verschiedener Grundfrequenz überlagert werden. Die verbesserte Reinigungswirkung ergibt sich dadurch, dass die durch den Kanal strömende Flüssigkeit durch die entgegengesetzte Richtung des zweiten Wanderfelds abgebremst wird, so dass die Verweilzeit der Flüssigkeit im Kanal bzw. innerhalb des ersten Wanderfelds verlängert werden kann. Bereits dadurch kann eine effektivere Reinigung mittels des Leenov-Kolin-Effekts erreicht werden. Bei dieser Ausführungsform hat das zweite Wanderfeld dieselbe Funktion wie das dritte Wanderfeld der davor beschriebenen Ausführungsform.

Die zuvor beschriebene Ausführungsform kann insbesondere auch bei diskontinuierlichem Betrieb der Vorrichtung eingesetzt werden, z.B. bei der Reinigung einer Aluminiumschmelze für eine Walzbarrengießanlage. Im diskontinuierlichen Betrieb kann es zur Reinigung ausreichend sein, die Partikel so lange an der Kanalwand festzuhalten, bis zum Beispiel der Gießvorgang beendet ist. Danach kann die Kanalwandung mechanisch oder anderweitig gereinigt werden. Insbesondere kann bei diesem Betrieb auf eine Überlagerung zweier Wanderfelder mit verschiedenen Grundfrequenzen verzichtet werden, da ein Abtransport der Partikel im Randbereich des Kanals in diesem Fall nicht erforderlich ist.

Bei einer Ausführungsform sind die Spulen der Spulenanordnung in mehreren Spulensätzen gruppiert, wobei ein erster Spulensatz mit Spulen zur Erzeugung des ersten magnetischen Wanderfelds, ein zweiter Spulensatz mit Spulen zur Erzeugung des zweiten magnetischen Wanderfelds und optional ein dritter Spulensatz mit Spulen zur Erzeugung des dritten magnetischen Wanderfelds vorgesehen sind. Auf diese Weise wird die Ansteuerung der Spulen durch die Elektronik vereinfacht. Beispielsweise können ein erster Spulensatz und ein darum oder darin angeordneter zweiter Spulensatz vorgesehen werden, um das erste und das zweite Wanderfeld zu erzeugen. Optional kann stromabwärts des ersten und zweiten Spulensatzes ein dritter Spulensatz für das dritte Wanderfeld vorgesehen werden.

Bei einer Ausführungsform sind ein oder mehrere Spulen der Spulenanordnung mit Jochblechpaketen ausgestattet. Auf diese Weise kann das Magnetfeld geführt und verstärkt werden.

Bei einer Ausführungsform ist die Elektronik dazu eingerichtet, eine oder mehrere Spulen der Spulenanordnung im Betrieb mit einem Gleichstrom bzw. einem Gleichstromanteil zu beaufschlagen. Insbesondere können die zur Erzeugung des ersten, zweiten und/oder des optionalen dritten Wanderfelds auf die Spulen beaufschlagten Wechselströme mit einem Gleichstromanteil überlagert werden. Auf diese Weise können unerwünschte Turbulenzen in der Flüssigkeit gedämpft werden, die ansonsten die Partikel in den Hauptstrom in der Mitte des Kanals zurückmischen würden. Insbesondere kann durch die Gleichstrombeaufschlagung eine im Wesentlichen laminare Strömung im Kanal erreicht werden. Bei einer entsprechenden Ausführungsform des Verfahrens wird im Kanal zusätzlich ein statisches Magnetfeld erzeugt, das das erste Wanderfeld räumlich überlagert. Auf diese Weise können Turbulenzen gedämpft werden.

Bei einer Ausführungsform ist im Randbereich des Kanals eine Abführung angeordnet, um im Randbereich des Kanals strömende Flüssigkeit aus dem Kanal abzuleiten. Auf diese Weise werden die durch den Leenov-Kolin-Effekt in den Randbereich transportierten Verunreinigungen aus dem Kanal herausgeleitet, während die verunreinigungsärmere Flüssigkeit im Inneren weiter durch den Kanal geführt wird.

Bei einer Ausführungsform ist die Kanalwandung rauwandig ausgekleidet, beispielsweise durch eine Beschichtung oder eine Hülse mit rauer Oberfläche. Für die Beschichtung oder die Hülse kommen insbesondere Oxidverbindungen, beispielsweise Aluminiumoxid in Betracht. Auf diese Weise können durch den Leenov-Kolin-Effekt an die Kanalwandung transportierte Partikel an der Kanalwandung festgehalten und damit aus der elektrisch leitenden Flüssigkeit entfernt werden.

Bei einer Ausführungsform ist im Kanal ein sich in Kanalrichtung erstreckender Strömungskörper angeordnet, insbesondere mittig im Kanalquerschnitt. Der Strömungskörper kann beispielsweise über eine Halterung an der Wandung des Kanals befestigt sein. Der Strömungskörper kann beispielsweise eine zylindrische Form aufweisen, wobei die axiale Achse des Zylinders in Kanalrichtung verläuft. Es wurde festgestellt, dass die Kraftwirkung durch die elektromagnetischen Wanderfelder in der Kanalmitte sehr schwach ist. Insbesondere verschwinden in einem zylindrischen Kanal die Lorentzkräfte in der Kanalmitte aufgrund der Zylindersymmetrie. Daher ist die durch den Leenov-Kolin-Effekt erreichte Reinigungswirkung auf die Flüssigkeit in der Kanalmitte geringer, so dass die Flüssigkeit in diesem Bereich stärker verunreinigt sein kann. Durch das Vorsehen des Strömungskörpers wird dieser Bereich blockiert, so dass die Flüssigkeit weiter nach außen in einen Bereich gelangt, in dem die Kraftwirkung durch die elektromagnetischen Wanderfelder und damit der Leenov-Kolin-Effekt größer ist. Diese Ausführungsform ist insbesondere für große Kanalquerschnitte geeignet, wenn die Eindringtiefen der elektromagnetischen Wanderfelder kleiner sind als der Kanalradius. Umgekehrt erlaubt diese Ausführungsform, größere Kanalquerschnitte zu wählen.

Bei einer Ausführungsform ist der Kanal im Kreislauf betreibbar, so dass die elektrisch leitende Flüssigkeit mehrfach nacheinander durch das erste und zweite (und optional durch das dritte) Wanderfeld geführt werden kann. Bei einer entsprechenden Ausführungsform des Verfahrens wird die elektrisch leitende Flüssigkeit mehrfach nacheinander durch das erste und zweite (und optional durch das dritte) Wanderfeld geführt. Beispielsweise kann der Kanal als Ringkanal ausgebildet sein. Auf diese Weise kann die Flüssigkeit das erste und zweite Wanderfeld mehrfach durchlaufen, so dass ein besserer Reinigungseffekt erzielt wird.

Weitere Vorteile und Merkmale der Erfindung ergeben sich aus der nachfolgenden Beschreibung mehrerer Ausführungsbeispiele der elektromagnetischen Pumpe und des Verfahrens, wobei auf die beigefügte Zeichnung Bezug genommen wird.

In der Zeichnung zeigen

Fig. 1a-b    eine schematische Darstellung einer um einen Kanal angeordneten, beschalteten Spulenanordnung zur Erzeugung eines Wanderfelds,

Fig. 2a-b    eine schematische Darstellung der für die Modellrechnung verwendeten Geometrie,

Fig. 3    ein Diagramm der gemittelten axialen und radialen Lorentzkraftkomponenten als Funktion des Parameters $\Theta$ gemäß einer analytischen Betrachtung des äquivalenten Problems einer planaren Stromverteilung,

Fig. 4    ein Diagramm der relativen Stärke der auf den Rohrumfang bezogenen gemittelten radialen ($Z_{rc}$) und axialen ($Z_{zc}$) Lorentzkraftkomponenten einer zylindrischen Stromverteilung in Abhängigkeit vom dimensionslosen Parameter $\Theta$,

Fig. 5    ein Diagramm der räumlichen Verteilung der gemittelten Lorentzkräfte in einem Längsschnitt des Rohres für ein typisches Auslegungsbeispiel als Vektordarstellung,

Fig. 6a-b    eine schematische Darstellung eines Ausführungsbeispiels der erfindungsgemäßen Vorrichtung und des erfindungsgemäßen Verfahrens,

Fig. 7a-d    Diagramme der von der Elektronik auf die Spulen der Spulenanordnung beaufschlagten Ströme,

Fig. 8    eine schematische Darstellung eines alternativen Ausführungsbeispiels der erfindungsgemäßen Vorrichtung und des erfindungsgemäßen Verfahrens,

Fig. 9    eine schematische Darstellung eines weiteren Ausführungsbeispiels der erfindungsgemäßen Vorrichtung und des erfindungsgemäßen Verfahrens mit einem eingesetzten Strömungskörper zur Erhöhung der Wirksamkeit der Lorentzkräfte und

Fig. 10    die relative Stärke der auf den Rohrumfang bezogenen gemittelten radialen (r) und axialen (z) Lorentzkraftkomponenten einer zylindrischen Stromverteilung in Abhängigkeit von der Frequenz für drei unterschiedliche Wellenlängen.

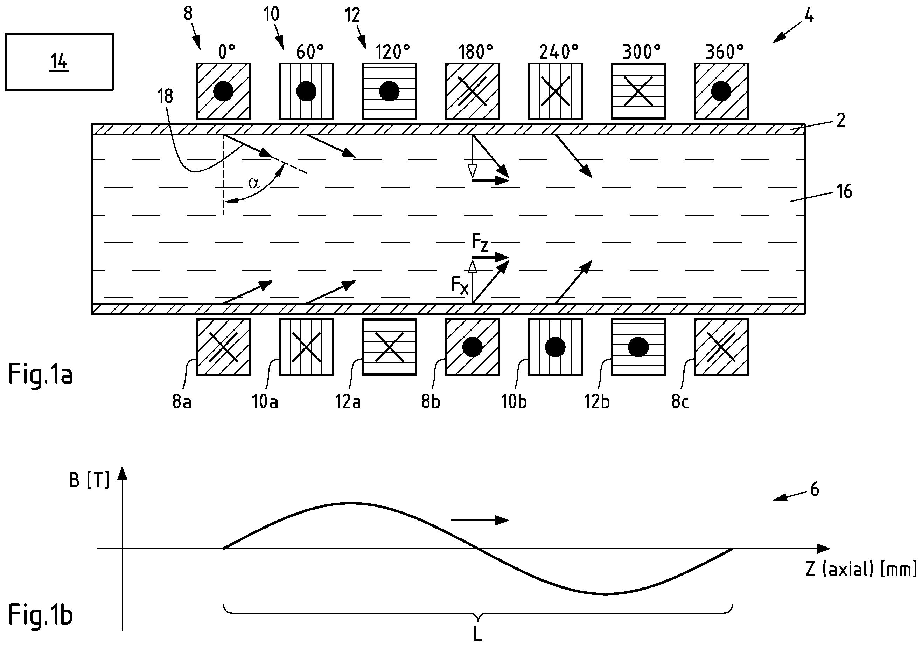

Fig. 1a zeigt eine schematische Darstellung einer um einen Kanal 2 angeordneten, beschalteten Spulenanordnung 4 zur Erzeugung eines durch den Kanal 2 laufenden elektromagnetischen Wanderfelds 6. Die Spulenanordnung 4 weist drei in axialer Richtung zueinander versetzte Spulen 8, 10, 12 auf, die von einer Elektronik 14 mit phasenversetzten elektrischen Strömen eines Mehrphasenstroms beaufschlagt werden. Die Phasendifferenz zwischen den Strömen der ersten und zweiten Spule 8, 10 sowie zwischen den Strömen der zweiten und dritten Spule 10, 12 beträgt jeweils 60°.

Die Spulen 8, 10, 12 weisen jeweils mehrere Teilspulen mit um den Kanal 2 laufenden Wicklungen auf. Die Wicklungen können jeweils eine oder mehrere Windungen aufweisen. Die Windungen der jeweiligen ersten Teilspulen 8a, 10a, 12a verlaufen gegen den Uhrzeigersinn, die Windungen der jeweiligen zweiten Teilspulen 8b, 10b, 12b im Uhrzeigersinn, die Windungen der jeweiligen dritten Teilspulen 8c etc. wieder gegen Uhrzeigersinn usw. um den Kanal 2. Durch die gegenläufige Wicklung weist der Strom durch die Windungen der zweiten Teilspulen 8b, 10b, 12b eine Phasendifferenz von 180° zu den Windungen der jeweiligen ersten Teilspulen 8a, 10a, 12a auf. Auf diese Weise kann mit nur drei Spulen und dreiphasigem Strom eine vollständige Periode von 0° bis 360° in 60°-Schritten abgedeckt werden.

Die phasenversetzten Ströme bewirken im Kanal 2 eine elektromagnetische Welle, die sich in axialer Richtung bewegt, d.h. ein elektromagnetisches Wanderfeld 6. Fig. 1b zeigt den räumlich gemittelten Verlauf der Stromverteilung in allen Teilspulen als Funktion der axialen Achse z zu einem Zeitpunkt. Die axiale Bewegung des Wanderfelds 6 über die Zeit ist in Fig. 1b durch einen Pfeil angedeutet. Die Phasenlage des Wanderfelds in axialer Richtung ergibt sich aus der Phasenlage der einzelnen Wicklungen der Spulenanordnung 4. Die Wellenlänge L des Wanderfelds 6 entspricht damit dem Abstand zwischen den Wicklungen bei 0° und 360° Phasenlage, d.h. dem Abstand einer Periodenlänge. Die Frequenz f des Wanderfelds 6 entspricht der Frequenz f der Ströme, mit der die Spulen 8, 10, 12 beaufschlagt werden.

Wird in dem Kanal 2 eine leitfähige Metallschmelze 16 geführt, dringt das Wanderfeld 6 aufgrund des Skineffektes nur bis zu einer bestimmten Tiefe in die Schmelze ein, und zwar umso tiefer, je geringer die Frequenz f ist. Das Wanderfeld 6 induziert in der Metallschmelze 16 Ströme, die im Wanderfeld 6 wiederum Lorentzkräfte 18 hervorrufen, die auf die Metallschmelze 16 wirken und deren Strömung beeinflussen.

Die Wirkung der Lorentzkräfte ist abhängig vom Winkel $\alpha$ der Lorentzkraft zur Radialrichtung senkrecht zur Kanalwandung. Bei einem Winkel $\alpha > 45°$ dominiert die axiale Komponente $F_z$ der Lorentzkraft, die einen Transport der Metallschmelze 16 durch den Kanal bewirkt, während bei einem Winkel $\alpha < 45°$ die radiale Komponente Fr überwiegt, wodurch der Leenov-Kolin-Effekt verstärkt wird.

Im Folgenden wird nun die Berechnung der durch die Wanderströme hervorgerufenen Lorentzkräfte skizziert, die der vorliegenden Erfindung zu Grunde liegt.

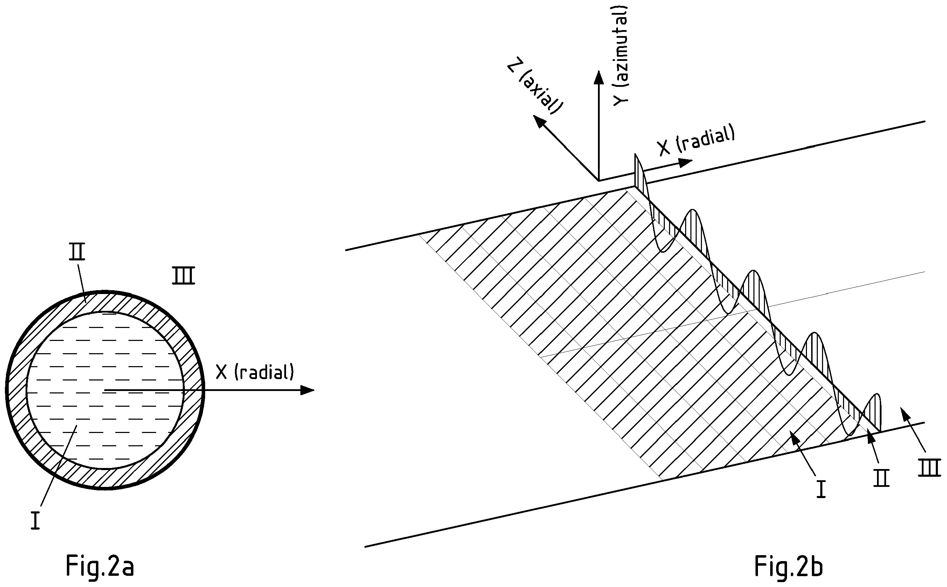

Da die elektromagnetischen Wanderströme aufgrund des Skineffekts nur eine begrenzte Eindringtiefe in die leitende Flüssigkeit aufweisen, kann zur Berechnung eine vereinfachte zweidimensionale Geometrie betrachtet werden, die schematisch in den Fig. 2a-b dargestellt ist. Fig. 2a zeigt den Kanalquerschnitt mit einem inneren Bereich I, in dem sich die leitfähige Flüssigkeit befindet, einem Bereich II der Kanalwandung und einen Bereich III außerhalb des Kanals, in dem sich die Spulenanordnung befindet. Bei großen Kanaldurchmessern kann die Krümmung der Kanalwandung vernachlässigt werden, so dass eine zweidimensionale Geometrie betrachtet werden kann, die sich entlang der radialen Achse in Fig. 2a und entlang der axialen Achse aufspannt.

Die ebene Geometrie ist in Fig. 2b dargestellt und weist drei Lagen I, II und III auf, wobei die Lage I der leitfähigen Flüssigkeit, die Lage II der Kanalwandung und die Lage III dem Raum außerhalb der Spulenanordnung entspricht. In guter Näherung können die Lage I als halbunendlicher Leiter, die Lage II als Vakuumschicht der Dicke d und die Lage III als halbunendliches Vakuum angenommen werden. Die Spulenanordnung kann in guter Näherung als infinitesimaler Leiter zwischen den Lagen II und III dargestellt werden, auf den (wie in Fig. 2b illustriert) die folgende modulierte, wandernde Flächenstromverteilungjo aufgeprägt ist:

$$j_0(x, z, t) = I_0 e^{i(k_z z - \omega t)} \delta(x - d) \tag{1}$$

$\delta(x)$ ist die Dirac'sche Delta-Distribution. Die Richtung des Stroms $j_0$ ist aus der in Fig. 2 gezeigten x-z-Ebene heraus in y-Richtung. Die Modulation des Stroms $j_0$ bewirkt eine Wanderwelle in z-Richtung, d.h. in axialer Richtung des Kanals.

Bei Vernachlässigung von Verschiebeströmen kann aus den Maxwell-Gleichungen eine Gleichung für das Vektorpotential abgeleitet werden, die alle physikalischen Informationen des Problems enthält. In der vorliegend verwendeten ebenen Geometrie in der x-z-Ebene ergibt sich nur die y-Komponente des Vektorpotentials:

$$\nabla^2 A_y = \left(\frac{\partial^2}{\partial x^2} + \frac{\partial^2}{\partial z^2}\right) A_y = \mu\sigma\frac{\partial A_y}{\partial t} - \mu j_0 \tag{2}$$

$j_0$ ist der von außen auf die Spulen aufgeprägte Strom (1), der in der Modellgeometrie für $x \neq d$ verschwindet. Der durch das elektromagnetische Wanderfeld induzierte Strom berechnet sich durch: $\vec{j} = \frac{1}{\mu} rot\, \vec{B} = \frac{1}{\mu} rot\, rot\vec{A}.$

Im Vakuum (Lagen II und III) ist die Leitfähigkeit Null und $j_0$ tritt nur an der Grenze zwischen den Lagen II und III auf, so dass sich Gleichung (2) für die drei Lagen I, II und III wie folgt vereinfacht:

I:

$$\nabla^2 A_I = \mu\sigma \frac{\partial A_I}{\partial t} \tag{2a}$$

II:

$$\nabla^2 A_{II} = 0 \tag{2b}$$

III:

$$\nabla^2 A_{III} = 0 \tag{2c}$$

Es ist zu erwarten, dass die Lösung der aufgeprägten Modulation $\sim e^{i(k_z z - \omega t)}$ aus Gleichung (1) folgt. In der Flüssigkeit muss die Lösung der Gleichung (2a) für große Abstände von der Grenze zur Lage II verschwinden, so dass sich in Lage I eine Lösung der Gleichung (2a) mit folgender Form ergibt:

$$A_I(x, z, t) = A_1 e^{ik_z z - i\omega t + k_x x} \tag{3a}$$

Der Faktor $e^{k_x x}$ stellt sicher, dass die Funktion bei $x \to -\infty$ verschwindet. Einsetzen von (3a) in (2a) liefert eine Bedingung für $k_x$:

$$\rightarrow \quad \left(k_x{}^2 - k_z{}^2\right) A_I = -i\mu\sigma\omega A_I \quad \text{oder} \quad k_x{}^2 = k_z{}^2 - i\mu\sigma\omega \tag{4}$$

In Lage II wird Gleichung (2b) durch folgende Lösung erfüllt, wobei $k_x = \pm k_z$:

$$A_{II}(x, z, t) = A_{2a} e^{ik_z z - i\omega t + k_z x} + A_{2b} e^{ik_z z - i\omega t - k_z x} \tag{3b}$$

In Lage III muss die Lösung für $x \to \infty$ verschwinden, da sich in großer Entfernung von der Spule die gegensätzlichen Feldbeiträge der zueinander umgekehrten Teilspulen aufheben. Wählt man einen ähnlichen Ansatz wie (3b), so kann diese Bedingung nur erfüllt werden, wenn man den Faktor $A_{2a}$ gleich Null setzt. Damit folgt für den Lösungsansatz in Lage III :

$$A_{III}(x, z, t) = A_3 e^{ik_z z + i\omega t - k_z x} \tag{3c}$$

Zur Bestimmung der Lösung werden nun die Koeffizienten $A_1$, $A_{2a}$, $A_{2b}$ und $A_3$ aus den Stetigkeitsbedingungen des Vektorpotentials $A(x, z, t)$ an den Grenzen bei $x = 0$ zwischen den Lagen I und II sowie bei $x = d$ zwischen den Lagen II und III bestimmt. Es gelten die folgenden Stetigkeitsbedingungen:

$$A_I(x = 0) = A_{II}(x = 0) \quad \rightarrow \quad A_1 = A_{2a} + A_{2b} \tag{5}$$

$$A_{II}(x = d) = A_{III}(x = d) \quad \rightarrow \quad A_{2a} e^{k_z d} + A_{2b} e^{-k_z d} = A_3 e^{-k_z d} \tag{6}$$

Ohne Oberflächenstrom, d.h. zwischen Lage I und II, muss zudem die Ableitung $\frac{\partial A}{\partial x}$ stetig sein:

$$\frac{\partial}{\partial x} A_I(x=0) = \frac{\partial}{\partial x} A_{II}(x=0) \quad \rightarrow \quad k_x A_1 = k_z A_{2a} - k_z A_{2b}$$

bzw.

$$\frac{k_x}{k_z} A_1 = A_{2a} - A_{2b} \tag{7a}$$

Beim Oberflächenstrom zwischen Lage II und III ist $\frac{\partial A}{\partial x}$ wegen Amperes Gesetz ($rot\vec{H} = \nabla \times \vec{H} = \vec{J}$] unstetig:

$$\frac{\partial}{\partial x} A_{II}(x=d) = \frac{\partial}{\partial x} A_{III}(x=d) + \mu I_0$$

$$\rightarrow \quad k_z A_{2a} e^{k_z d} - k_z A_{2b} e^{-k_z d} = -k_z A_3 e^{-k_z d} + \mu I_0 \tag{8}$$

bzw.

$$A_{2a} e^{k_z d} - A_{2b} e^{-k_z d} = -A_3 e^{-k_z d} + \frac{\mu}{k_z} I_0 \tag{8a}$$

Addition von (6) und (8a) liefert:

$$2 A_{2a} e^{k_z d} = \frac{\mu}{k_z} I_0$$

bzw.

$$A_{2a} = \frac{1}{2} \frac{\mu}{k_z} I_0 e^{-k_z d} \tag{9}$$

Addition von (5) und (7a) ergibt:

$$A_1 \left(1 + \frac{k_x}{k_z}\right) = 2 A_{2a}$$

und mit (9):

$$A_1 = \frac{\mu}{k_x + k_z} I_0 e^{-k_z d} \tag{10}$$

Aus (5), (9) und (10) folgt dann:

$$A_{2b} = A_1 - A_{2a} = \mu I_0 e^{-k_z d} \left(\frac{1}{k_x + k_z} - \frac{1}{2 k_z}\right) \tag{11}$$

Subtraktion (6) - (8a) ergibt:

$$2 A_{2b} e^{-k_z d} = 2 A_3 e^{-k_z d} - \frac{\mu}{k_z} I_0$$

bzw.

$$A_3 = A_{2b} + \frac{\mu}{2k_z} I_0 e^{k_z d} = \mu I_0 \left[\frac{e^{k_z d}}{2k_z} - \frac{e^{-k_z d}}{2k_z} + \frac{e^{-k_z d}}{k_x + k_z}\right] = \mu I_0 \left[\frac{\sinh(k_z d)}{k_z} + \frac{e^{-k_z d}}{k_x + k_z}\right] \quad (12)$$

Damit ergibt sich folgende Gesamtlösung für $A(x, z, t)$:

$$A_I(x, z, t) = \frac{\mu}{k_x + k_z} I_0 e^{-k_z d} e^{ik_z z - i\omega t + k_x x} \quad (13a)$$

$$A_{II}(x, z, t) = \mu I_0 e^{-k_z d} e^{ik_z z - i\omega t} \left[\frac{e^{k_z x} - e^{-k_z x}}{2k_z} + \frac{e^{-k_z x}}{k_x + k_z}\right]$$

$$= \mu I_0 e^{-k_z d} e^{ik_z z - i\omega t} \left[\frac{\sinh(k_z x)}{k_z} + \frac{e^{-k_z x}}{k_x + k_z}\right] \quad (13b)$$

$$A_{III}(x, z, t) = \mu I_0 \left[\frac{\sinh(k_z d)}{k_z} + \frac{e^{-k_z d}}{k_x + k_z}\right] e^{ik_z - i\omega t - k_z x} \quad (13c)$$

$k_x$ ist in (4) eine komplexe Größe und kann wie folgt ausgedrückt werden, um Realteil und Imaginärteil zu separieren:

$$k_x = \sqrt{k_z^2 - i\mu\sigma\omega} = \sqrt[4]{k_z^4 + (\mu\sigma\omega)^2} \, e^{-i\frac{\varphi}{2}} \quad (14a)$$

mit

$$\varphi = \arctan\left(\frac{\mu\sigma\omega}{k_z^2}\right) \quad (14b)$$

oder alternativ

$$k_x = \frac{k_z}{\sqrt{2}} \left[\sqrt{\sqrt{1 + \frac{(\mu\sigma\omega)^2}{k_z^4}} + 1} - i\sqrt{\sqrt{1 + \frac{(\mu\sigma\omega)^2}{k_z^4}} - 1}\right] \quad (14c)$$

Mit

$$\kappa = \sqrt{1 + \frac{(\mu\sigma\omega)^2}{k_z^4}} \quad (14d)$$

kann (14c) wie folgt geschrieben werden:

$$k_x = \frac{k_z}{\sqrt{2}} \left(\sqrt{\kappa + 1} - i\sqrt{\kappa - 1}\right) \quad (14e)$$

Aus dem Vektorpotential $A(x, z, t)$ können aus folgenden Gleichungen das magnetische Feld $\vec{B}$, der induzierte Strom $\vec{j}$ und die Lorentzkraftdichte $\vec{F_L}$ abgeleitet werden

$$\vec{B} = \text{rot } \vec{A} = \nabla \times \vec{A} \quad (15)$$

$$\vec{j} = \frac{1}{\mu}\text{rot}\,\vec{B} = \nabla \times \vec{B} \qquad (16)$$

$$\vec{F_L} = \vec{j} \times \vec{B} \qquad (17)$$

Lorentzkräfte treten nur in der leitfähigen Lage I auf. Die Berechnung dieser Kräfte kann auf die y-Komponente des Vektorpotentials $A_I(x, z, t)$ beschränkt werden, da die x- und z-Komponenten in der ebenen Modellgeometrie gleich Null sind.

$$\vec{A} = \begin{pmatrix} 0 \\ A_y(x,z,t) \\ 0 \end{pmatrix} = \begin{pmatrix} 0 \\ A_I(x,z,t) \\ 0 \end{pmatrix} \qquad (18)$$

Mit (14e) kann Gleichung (13a) wie folgt geschrieben werden:

$$A_y(x,z,t) = \frac{\mu I_0}{k_z + \frac{1}{\sqrt{2}}k_z\left(\sqrt{\kappa+1}-i\sqrt{\kappa-1}\right)} e^{-k_z d + \frac{1}{\sqrt{2}}k_z\sqrt{\kappa+1}x} e^{i\left(k_z z - \omega t - \frac{1}{\sqrt{2}}k_z\sqrt{\kappa-1}x\right)} \qquad (19)$$

bzw.

$$A_y(x,z,t) = \frac{\mu I_0\left(k_z + \frac{1}{\sqrt{2}}k_z\sqrt{\kappa+1}+i\frac{1}{\sqrt{2}}k_z\sqrt{\kappa-1}\right)}{\left(k_z + \frac{1}{\sqrt{2}}k_z\sqrt{\kappa+1}\right)^2 + \left(\frac{1}{\sqrt{2}}k_z\sqrt{\kappa-1}\right)^2} e^{-k_z d + \frac{1}{\sqrt{2}}k_z\sqrt{\kappa+1}x} e^{i\left(k_z z - \omega t - \frac{1}{\sqrt{2}}k_z\sqrt{\kappa-1}x\right)}, \quad (19a)$$

was sich einfacher in Real- und Imaginärteil zerlegen lässt.
Mit der Gleichung

$$e^{i\varphi} = \cos\varphi + i\sin\varphi \qquad (20)$$

ergibt sich der Realteil von (19a) als:

$$Re\left(A_y(x,z,t)\right) = \frac{\mu I_0 e^{-k_z d + \frac{1}{\sqrt{2}}k_z\sqrt{\kappa+1}x}}{\left(k_z + \frac{1}{\sqrt{2}}k_z\sqrt{\kappa+1}\right)^2 + \left(\frac{1}{\sqrt{2}}k_z\sqrt{\kappa-1}\right)^2}\left[\left(k_z + \frac{1}{\sqrt{2}}k_z\sqrt{\kappa+1}\right)\cos\left(k_z z - \omega t - \right.\right.$$

$$\left.\left. \frac{1}{\sqrt{2}}k_z\sqrt{\kappa-1}x\right) - \frac{1}{\sqrt{2}}k_z\sqrt{\kappa-1}\sin\left(k_z z - \omega t - \frac{1}{\sqrt{2}}k_z\sqrt{\kappa-1}x\right)\right] \qquad (21)$$

Im Folgenden wird nur noch der (physikalische) Realteil des Vektorpotentials $A_y$ betrachtet, ohne dass in den Formeln jedes Mal "Re" für den Realteil angegeben wird.
Aus Gleichung (21) ergibt sich dann:

$$A_y(x,z,t) = \frac{\mu I_0 e^{-k_z d + \frac{1}{\sqrt{2}}k_z\sqrt{\kappa+1}x}}{\left(1 + \frac{1}{\sqrt{2}}\sqrt{\kappa+1}\right)^2 + \left(\frac{1}{\sqrt{2}}\sqrt{\kappa-1}\right)^2}\frac{1}{k_z}\left[\left(1 + \frac{1}{\sqrt{2}}\sqrt{\kappa+1}\right)\cos\left(k_z z - \omega t - \right.\right.$$

$$\left.\left. \frac{1}{\sqrt{2}}k_z\sqrt{\kappa-1}x\right) - \frac{1}{\sqrt{2}}\sqrt{\kappa-1}\sin\left(k_z z - \omega t - \frac{1}{\sqrt{2}}k_z\sqrt{\kappa-1}x\right)\right] \qquad (22)$$

bzw.

$$A_y(x,z,t) = \frac{\mu I_0 e^{-k_z d + \frac{1}{\sqrt{2}} k_z \sqrt{\kappa+1}x}}{1+\sqrt{2}\sqrt{\kappa+1}+\kappa} \frac{1}{k_z} \left[ \left(1 + \frac{1}{\sqrt{2}}\sqrt{\kappa+1}\right) \cos\left(k_z z - \omega t - \right.\right.$$

$$\left.\left. \frac{1}{\sqrt{2}} k_z \sqrt{\kappa-1}x \right) - \frac{1}{\sqrt{2}}\sqrt{\kappa-1}\sin\left(k_z z - \omega t - \frac{1}{\sqrt{2}}k_z\sqrt{\kappa-1}x\right)\right] \qquad (23)$$

Aus (15) und (18) folgt:

$$\vec{B} = \text{rot } \vec{A} = \nabla \times \vec{A} = \begin{pmatrix} -\frac{\partial A_y}{\partial z} \\ 0 \\ \frac{\partial A_y}{\partial x} \end{pmatrix} = \begin{pmatrix} B_x \\ 0 \\ B_z \end{pmatrix} \qquad (24)$$

Durch Einsetzen von (23) in (24) ergibt sich:

$$B_x = \frac{\mu I_0 e^{-k_z d + \frac{1}{\sqrt{2}} k_z \sqrt{\kappa+1}x}}{1+\sqrt{2}\sqrt{\kappa+1}+\kappa} \left[ \left(1 + \frac{1}{\sqrt{2}}\sqrt{\kappa+1}\right) \sin\left(k_z z - \omega t - \frac{1}{\sqrt{2}}k_z\sqrt{\kappa-1}x\right) + \right.$$

$$\left. \frac{1}{\sqrt{2}}\sqrt{\kappa-1}\cos\left(k_z z - \omega t - \frac{1}{\sqrt{2}}k_z\sqrt{\kappa-1}x\right)\right] \qquad (25)$$

$$B_z = \frac{\mu I_0 e^{-k_z d + \frac{1}{\sqrt{2}} k_z \sqrt{\kappa+1}x}}{1+\sqrt{2}\sqrt{\kappa+1}+\kappa} \left\{ \frac{1}{\sqrt{2}}\sqrt{\kappa+1}\left[\left(1 + \frac{1}{\sqrt{2}}\sqrt{\kappa+1}\right)\cos\left(k_z z - \omega t - \right.\right.\right.$$

$$\left.\left. \frac{1}{\sqrt{2}}k_z\sqrt{\kappa-1}x\right) - \frac{1}{\sqrt{2}}\sqrt{\kappa-1}\sin\left(k_z z - \omega t - \frac{1}{\sqrt{2}}k_z\sqrt{\kappa-1}x\right)\right] + \frac{1}{\sqrt{2}}\sqrt{\kappa+1}\left[\left(1 + \right.\right.$$

$$\left.\left. \frac{1}{\sqrt{2}}\sqrt{\kappa+1}\right)\sin\left(k_z z - \omega t - \frac{1}{\sqrt{2}}k_z\sqrt{\kappa-1}x\right) + \frac{1}{\sqrt{2}}\sqrt{\kappa-1}\cos\left(k_z z - \omega t - \right.\right.$$

$$\left.\left.\left. \frac{1}{\sqrt{2}}k_z\sqrt{\kappa-1}x\right)\right]\right\} \qquad (26)$$

bzw. nach Vereinfachung

$$B_z = \frac{\mu I_0 e^{-k_z d + \frac{1}{\sqrt{2}} k_z \sqrt{\kappa+1}x}}{1+\sqrt{2}\sqrt{\kappa+1}+\kappa} \left[ \left(\kappa + \frac{1}{\sqrt{2}}\sqrt{\kappa+1}\right)\cos\left(k_z z - \omega t - \frac{1}{\sqrt{2}}k_z\sqrt{\kappa-1}x\right) + \right.$$

$$\left. \frac{1}{\sqrt{2}}\sqrt{\kappa-1}\sin\left(k_z z - \omega t - \frac{1}{\sqrt{2}}k_z\sqrt{\kappa-1}x\right)\right] \qquad (27)$$

Der induzierte Strom kann entweder aus (25) und (27) mit (16) und (24) berechnet werden:

$$\vec{j} = \frac{1}{\mu}\text{rot } \vec{B} = \frac{1}{\mu}\begin{pmatrix} 0 \\ \frac{\partial B_x}{\partial z} - \frac{\partial B_z}{\partial x} \\ 0 \end{pmatrix} \qquad (28)$$

oder aus (23) mit (2a) und (24)

$$\vec{j} = \frac{1}{\mu}\text{rot } \vec{B} = \frac{1}{\mu}\text{rot rot }\vec{A} = \frac{1}{\mu}\nabla \times \nabla \times \vec{A} = -\frac{1}{\mu}\nabla^2\vec{A} = -\frac{1}{\mu}\mu\sigma\frac{\partial A_y}{\partial t} = -\sigma\frac{\partial A_y}{\partial t} \qquad (29)$$

Es ergibt sich jeweils:

$$j_y(x,z,t) =$$

$$-\frac{\mu\sigma\omega I_0}{k_z}\frac{e^{-k_zd+\frac{1}{\sqrt{2}}k_z\sqrt{\kappa+1}x}}{1+\sqrt{2}\sqrt{\kappa+1}+\kappa}\left[\left(1+\frac{1}{\sqrt{2}}\sqrt{\kappa+1}\right)\sin\left(k_zz-\omega t-\frac{1}{\sqrt{2}}k_z\sqrt{\kappa-1}x\right)+\right.$$

$$\left.\frac{1}{\sqrt{2}}\sqrt{\kappa-1}\cos\left(k_zz-\omega t-\frac{1}{\sqrt{2}}k_z\sqrt{\kappa-1}x\right)\right] \tag{30}$$

Aus (25), (27) und (30) kann mit (17) die Lorentzkraftdichte berechnet werden:

$$\vec{F_L}=\vec{j}\times\vec{B}=\begin{pmatrix}0\\j_y\\0\end{pmatrix}\times\begin{pmatrix}B_x\\0\\B_z\end{pmatrix}=\begin{pmatrix}j_yB_z\\0\\-j_yB_x\end{pmatrix}=\begin{pmatrix}F_x\\0\\F_z\end{pmatrix} \tag{31}$$

$$F_x=j_yB_z=-\mu I_0{}^2\frac{\mu\sigma\omega}{k_z}\frac{e^{-2k_zd+\sqrt{2}\sqrt{\kappa+1}k_zx}}{\left(1+\sqrt{2}\sqrt{\kappa+1}+\kappa\right)^2}\left[\left(1+\frac{1}{\sqrt{2}}\sqrt{\kappa+1}\right)\sin\left(k_zz-\omega t-\right.\right.$$

$$\left.\frac{1}{\sqrt{2}}k_z\sqrt{\kappa-1}x\right)+\frac{1}{\sqrt{2}}\sqrt{\kappa-1}\cos\left(k_zz-\omega t-\frac{1}{\sqrt{2}}k_z\sqrt{\kappa-1}x\right)\right]\left[\left(\kappa+\right.\right.$$

$$\left.\frac{1}{\sqrt{2}}\sqrt{\kappa+1}\right)\cos\left(k_zz-\omega t-\frac{1}{\sqrt{2}}k_z\sqrt{\kappa-1}x\right)+\frac{1}{\sqrt{2}}\sqrt{\kappa-1}\sin\left(k_zz-\omega t-\right.$$

$$\left.\left.\frac{1}{\sqrt{2}}k_z\sqrt{\kappa-1}x\right)\right] \tag{32}$$

und

$$F_z=-j_yB_x=-\mu I_0{}^2\frac{\mu\sigma\omega}{k_z}\frac{e^{-2k_zd+\sqrt{2}\sqrt{\kappa+1}k_zx}}{\left(1+\sqrt{2}\sqrt{\kappa+1}+\kappa\right)^2}\left[\left(1+\frac{1}{\sqrt{2}}\sqrt{\kappa+1}\right)\sin\left(k_zz-\omega t-\right.\right.$$

$$\left.\left.\frac{1}{\sqrt{2}}k_z\sqrt{\kappa-1}x\right)+\frac{1}{\sqrt{2}}\sqrt{\kappa-1}\cos\left(k_zz-\omega t-\frac{1}{\sqrt{2}}k_z\sqrt{\kappa-1}x\right)\right]^2 \tag{33}$$

$F_x$ und $F_z$ sind Wanderwellen in z-Richtung, d.h. in axialer Richtung des Kanals. Zur Bestimmung der mittleren Kraftwirkung auf die leitfähige Flüssigkeit werden die zeitlichen Mittelwerte bzw. die räumlichen Mittelwerte über eine Periode $\text{Periode}=\frac{2\pi}{k_z}$ gebildet.

Der Mittelwert entlang der z-Richtung über eine Periode $\langle F_x\rangle_z$ ergibt sich direkt durch Integration:

$$\langle F_x\rangle_z=\frac{1}{L}\int_0^L F_x\,dz, \tag{34}$$

wobei das Integrationsintervall $L$ wie folgt mit $k_z$ zusammenhängt:

$$L=\frac{2\pi}{k_z} \tag{35}$$

Bei der Auswertung von (34) kann die Orthogonalität von Sinus und Kosinus ausgenutzt werden, wodurch sich die Terme stark vereinfachen:

$$\frac{1}{L}\int_0^L\cos(k_zz+\beta)\cos(k_zz+\beta)\,dz=\frac{1}{2} \tag{36a}$$

$$\frac{1}{L}\int_0^L \sin(k_z z + \beta)\sin(k_z z + \beta)\,dz = \frac{1}{2} \tag{36b}$$

$$\frac{1}{L}\int_0^L \sin(k_z z + \beta)\cos(k_z z + \beta)\,dz = 0 \tag{36c}$$

Da die Zeitabhängigkeit bei der Integration nur in den $\beta$-Termen in (36a-c) auftaucht, verschwindet diese vollständig durch die z-Mittelung (34) über eine Periode, so dass sich schließlich folgender Ausdruck ergibt:

$$\langle F_x\rangle_z = -\frac{1}{2}\mu I_0{}^2 \frac{\mu\sigma\omega}{k_z} e^{-2k_z d + \sqrt{2}\sqrt{\kappa+1}k_z x}\frac{\frac{1}{\sqrt{2}}\sqrt{\kappa-1}}{1+\sqrt{2}\sqrt{\kappa+1}+\kappa} \tag{37}$$

Auf gleiche Weise kann der in z-Richtung gemittelte Wert von $F_z$ berechnet werden, für den sich ergibt:

$$\langle F_z\rangle_z = \frac{1}{2}\mu I_0{}^2 \frac{\mu\sigma\omega}{k_z} e^{-2k_z d + \sqrt{2}\sqrt{\kappa+1}k_z x}\frac{1}{1+\sqrt{2}\sqrt{\kappa+1}+\kappa} \tag{38}$$

Damit weisen sowohl die radiale x-Komponente als auch die axiale z-Komponente einen exponentiellen Abfall in x-Richtung auf.
Aus den Gleichungen (37) und (38) kann der Winkel $\alpha$ der Lorentzkraft zur radialen Richtung berechnet werden:

$$\tan(\alpha) = \frac{\langle F_z\rangle_z}{-\langle F_x\rangle_z} = \frac{\sqrt{2}}{\sqrt{\kappa-1}} \tag{39}$$

Wenn der Winkel $\alpha$ größer als 45° ist, ist die axiale Kraftkomponente (in z-Richtung) größer als die radiale Kraftkomponente (in x-Richtung). Wenn $\alpha$ kleiner ist als 45° ist die radiale Kraftkomponente größer als die axiale Kraftkomponente. Im ersten Fall üben die Lorentzkräfte eine effektivere Förder- bzw. Pumpwirkung auf die Flüssigkeit aus, während im zweiten Fall der Leenov-Kolin-Effekt und damit die Filterwirkung verstärkt wird.
Im Folgenden werden die Bedingungen für den kritischen Winkel von 45° berechnet:

$$\tan(45°) = \tan\left(\frac{\pi}{4}\right) = 1 = \frac{\sqrt{2}}{\sqrt{\kappa-1}} \tag{40}$$

Auflösen nach $\kappa$ ergibt:

$$\kappa_{45°} = 3 \tag{41}$$

bzw. mit (14d): $\kappa = \sqrt{1 + \frac{(\mu\sigma\omega)^2}{k_z{}^4}}.$

Hieraus ergeben sich die Bedingungen für die Frequenz und die Wellenlänge des Wanderfeldes am kritischen Winkel von 45°:

$$\frac{\mu\sigma\omega}{k_z{}^2} = \sqrt{8} \tag{42}$$

$$\omega_{45°} = \sqrt{8}\frac{k_z{}^2}{\mu\sigma} \tag{43}$$

$$f_{45°} = \frac{\omega_{45°}}{2\pi} = \frac{\sqrt{2}}{\pi}\frac{k_z{}^2}{\mu\sigma} \tag{44}$$

$$k_{Z45°} = \frac{2\pi}{L_{45°}} = \sqrt{\frac{\mu\sigma\omega}{2\sqrt{2}}} \qquad (45)$$

$$L_{45°} = 2\pi\frac{\sqrt{\sqrt{8}}}{\sqrt{\mu\sigma\omega}} \qquad (46)$$

Gleichungen (37) und (38) beschreiben ein Kraftprofil in x-Richtung. Um die Gesamtkraft zu berechnen, die insbesondere für die Abstimmung der vorwärts gerichteten Förderung und der Rücklaufströmung wichtig ist, werden diese Profile in x-Richtung integriert, so dass sich die gesamte radiale bzw. axiale Kraft pro Flächeneinheit der Flüssigkeit ergibt.

Mit der Notation

$$\langle f(x) \rangle_x = \int_{-\infty}^{0} f(x)\, dx \qquad (48)$$

und mit $\int_{-\infty}^{0} e^{ax} dx = \frac{1}{a}$ aus (37) und (38) ergibt sich für die Komponenten der Gesamtkraft:

$$\langle\langle F_x\rangle_z\rangle_x = \int_{-\infty}^{0} \langle F_x\rangle_z \ dx = -\frac{1}{4}\mu I_0{}^2 \frac{\mu\sigma\omega}{k_z{}^2} e^{-2k_z d} \frac{\sqrt{\kappa-1}}{(\sqrt{\kappa+1})(1+\sqrt{2}\sqrt{\kappa+1}+\kappa)} \qquad (49)$$

$$\langle\langle F_z\rangle_z\rangle_x = \int_{-\infty}^{0} \langle F_z\rangle_z \ dx = \frac{1}{4}\mu I_0{}^2 \frac{\mu\sigma\omega}{k_z{}^2} e^{-2k_z d} \frac{\sqrt{2}}{(\sqrt{\kappa+1})(1+\sqrt{2}\sqrt{\kappa+1}+\kappa)} \qquad (50)$$

Für den Winkel α zwischen der Lorentzkraft und der Radialrichtung gilt analog zu Gleichung (39):

$$\tan(\alpha) = \frac{\langle\langle F_z\rangle_z\rangle_x}{-\langle\langle F_x\rangle_z\rangle_x} = \frac{\sqrt{2}}{\sqrt{\kappa-1}} \qquad (51)$$

Das Verhalten der gemittelten Lorentzkraftkomponenten $F_x$ (radial) und $F_z$ (axial) aus Gleichungen (49) und (50) kann durch zwei dimensionslose Parameter beschrieben werden.

Der erste Parameter Θ ergibt sich aus $\kappa = \sqrt{1 + \frac{(\mu\sigma\omega)^2}{k_z{}^4}} = \sqrt{1 + \Theta^4}$ wie folgt:

$$\Theta = \frac{\sqrt{\mu\sigma\omega}}{k_z} = \frac{\sqrt{\mu\sigma\omega}\,L}{2\pi} = \frac{\sqrt{\mu\sigma\omega}}{\sqrt{2}}\frac{\sqrt{2}L}{2\pi} = \frac{\sqrt{2}}{2\pi}\frac{L}{\delta} \qquad (52)$$

$\delta = \sqrt{\frac{2}{\mu\sigma\omega}}$ in Gleichung (42) wird typischerweise als Eindringtiefe des elektromagnetischen Felds bezeichnet. Θ ist damit im Wesentlichen das Verhältnis zwischen der Wellenlänge des aufgeprägten Stroms und der Eindringtiefe. Der zweite Parameter taucht im Exponent auf und ist

$$\gamma = k_z d = \frac{2\pi d}{L} \qquad (53)$$

$\gamma$ ist das Verhältnis zwischen dem Abstand des Flächenstroms zur Oberfläche der leitfähigen Flüssigkeit und der Wellenlänge der aufgeprägten Stromverteilung. Mit diesen Definitionen lassen sich die Gleichungen (49) und (50) wie folgt umschreiben:

$$\langle\langle F_x\rangle_z\rangle_x = -\frac{1}{4}\mu I_0{}^2 e^{-2\gamma}\frac{\sqrt{\sqrt{1+\Theta^4}-1}\,\Theta^2}{\left(\sqrt{1+\Theta^4}+1\right)\left(\sqrt{2}+\sqrt{\sqrt{1+\Theta^4}+1}\right)} \tag{54}$$

$$\langle\langle F_z\rangle_z\rangle_x = \frac{1}{4}\mu I_0{}^2 e^{-2\gamma}\frac{\sqrt{2}\,\Theta^2}{\left(\sqrt{1+\Theta^4}+1\right)\left(\sqrt{2}+\sqrt{\sqrt{1+\Theta^4}+1}\right)} \tag{55}$$

Aus (42) und (52) folgt, dass die radiale und axiale Kraftkomponente für folgenden Wert von $\Theta$ gleich sind:

$$\Theta_{45°} = \sqrt[4]{8} = 1.68179$$

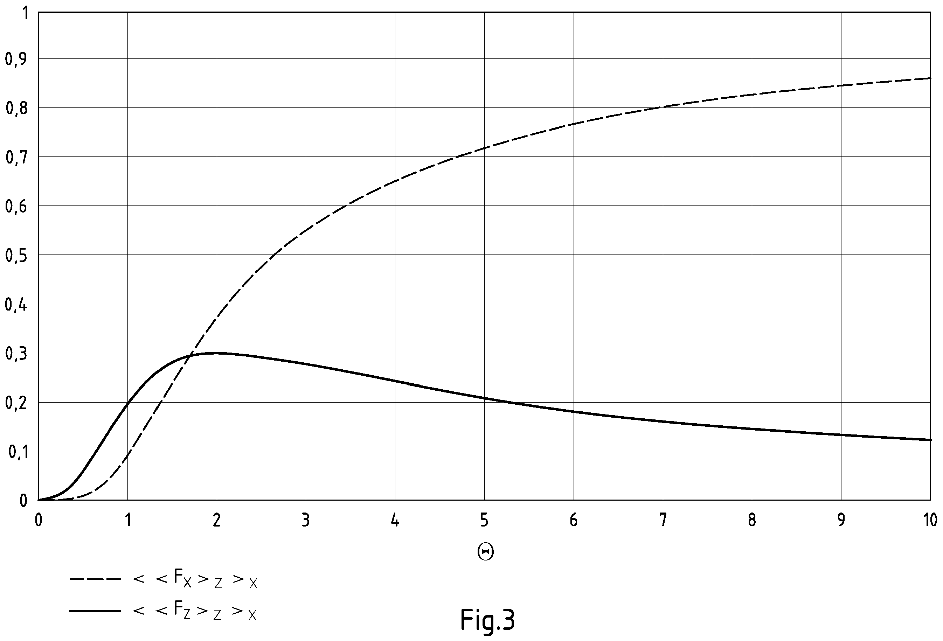

In Fig. 3 sind die gemittelten radialen und axialen Lorentzkraftkomponenten $\langle\langle F_x\rangle_z\rangle_x$ und $\langle\langle F_z\rangle_z\rangle_x$ gegen den Parameter $\Theta$, d.h. die Gleichungen (54) und (55) aufgetragen. Es zeigt sich, dass die axiale Lorentzkraftkomponente ein Maximum bei etwa 2 (genauer: 2,02887) hat und zu größeren $\Theta$ wieder abnimmt.

Mit kleinem $\Theta$ (z.B. im Bereich zwischen 1 und 3) kann demnach eine signifikante axiale Lorentzkraftkomponente erreicht werden, die einen effektiven Transport der Flüssigkeit bewirkt. Bei größerem $\Theta$ dominiert die radiale Lorentzkraftkomponente immer mehr über die axiale Lorentzkraftkomponente, wodurch der Leenov-Kolin-Effekt und damit die Filterwirkung verstärkt wird.

Bei einer Ausführungsform der Vorrichtung bzw. des Verfahrens sind die Spulenanordnung und die Elektronik entsprechend derart eingerichtet, dass $\Theta$ für das erste Wanderfeld kleiner ist als für das zweite Wanderfeld. Vorzugsweise liegt $\Theta$ für das erste Wanderfeld im Bereich 1 bis 3 und für das zweite Wanderfeld über 3.

Wie sich aus (52) ergibt, gilt folgende Proportionalität, so dass $\Theta$ insbesondere durch die Wellenlänge $L$ und die Frequenz $f = \omega/2\pi$ des betreffenden Wanderfelds bestimmt wird:

$$\Theta \propto \sqrt{f}\cdot L \tag{56}$$

Damit lässt sich $\Theta$ über die Spulenanordnung und die Elektronik zur Beaufschlagung der Spulen einstellen, denn die Wellenlänge $L$ und die Frequenz $f$ eines Wanderfeldes werden durch die Konfiguration und die Beschaltung der Spulen vorgegeben.

Insbesondere lässt sich der Wert von $\Theta$ damit durch Vergrößerung des Produkts aus der Wurzel der Frequenz $\sqrt{f}$ des Wanderfelds und der Wellenlänge L des Wanderfelds vergrößern. Entsprechend ist bei einer Ausführungsform das Produkt aus der Wurzel der Frequenz und der Wellenlänge für das zweite Wanderfeld größer als für das erste Wanderfeld.

Ist die Frequenz $f$ vorgegeben, um eine bestimmte Eindringtiefe des Wanderfelds zu erreichen, kann der Wert von $\Theta$ unabhängig von $f$ noch über eine Vergrößerung der Wellenlänge L vergrößert werden. Entsprechend ist die Wellenlänge des zweiten Wanderfelds bei einer Ausführungsform größer als die Wellenlänge des ersten Wanderfelds.

Die oben hergeleiteten Zusammenhänge zwischen den Komponenten der Lorentzkräfte und dem Parameter $\Theta$ gelten für die ebene Geometrie und damit insbesondere für große Kanaldurchmesser. Entsprechende Zusammenhänge lassen sich jedoch in analoger Weise auch für die Zylindergeometrie berechnen, so dass die vorliegend beschriebene Lehre auch für kleine Kanaldurchmesser angewendet werden kann. Anstelle der zuvor betrachteten drei planaren Lagen werden nun ein sich in z-Richtung erstreckendes mit einer leitfähigen Flüssigkeit gefülltes zylindrisches Rohr mit einem inneren Radius $r_i$ und eine sich außerhalb des Rohres befindliche konzentrische Stromschicht mit Radius R betrachtet.

Für die zu den Gleichungen (37) und (38) analogen in z-Richtung gemittelten radialen und axialen Kraftprofile $\langle F_r(r)\rangle$ und $\langle F_z(r)\rangle$ ergeben sich die Beziehungen:

$$\langle F_r(r) \rangle = -\frac{1}{2}\mu^2 \sigma \omega I_0{}^2 K_1(k_z R)^2 \frac{[K_0(k_z r_i)I_1(k_z r_i) + K_1(k_z r_i)I_0(k_z r_i)]^2}{[K_0(k_z R)I_1(k_z R) + K_1(k_z R)I_0(k_z R)]^2}$$

$$\cdot \frac{\mathrm{Im}\left[I_1(k_r r)\cdot \overline{k_r I_0(k_r r)}\right]}{|[K_0(k_z r_i)I_1(k_r r_i)k_z + K_1(k_z r_i)I_0(k_r r_i)k_r]|^2} \tag{57}$$

und

$$\langle F_z(r) \rangle = \frac{1}{2}\mu^2 \sigma \omega I_0{}^2 K_1(k_z R)^2 \frac{[K_0(k_z r_i)I_1(k_z r_i) + K_1(k_z r_i)I_0(k_z r_i)]^2}{[K_0(k_z R)I_1(k_z R) + K_1(k_z R)I_0(k_z R)]^2}$$

$$\cdot \frac{k_z |I_1(k_r r)|^2}{|[K_0(k_z r_i)I_1(k_r r_i)k_z + K_1(k_z r_i)I_0(k_r r_i)k_r]|^2} \tag{58}$$

wobei $I_\alpha(kr)$ und $K_\alpha(kr)$ die modifizierten Besselfunktionen erster und zweiter Art sind ($\alpha$ hier gleich 0 oder 1) und $k_r$ analog zu Gleichung (4) definiert wird durch:

$$k_r{}^2 = \left(k_z{}^2 - i\mu\omega\sigma\right) \tag{59}$$

Die Schreibweise $\overline{k_r I_0(k_r r)}$ bezeichnet das konjugiert Komplexe der Größe $k_r I_0(k_r r)$ und $|[K_0(k_z r_i)I_1(k_r r_i)k_z + K_1(k_z r_i)I_0(k_r r_i)k_r]|^2$ das Quadrat des Absolutbetrages der Größe $[K_0(k_z r_i)I_1(k_r r_i)k_z + K_1(k_z r_i)I_0(k_r r_i)k_r]$, die im allgemeinen komplex ist.

Analog zu den Gleichungen (49) und (50) ergeben sich für die radiale Kraftdichte $\langle\langle F_r(\rho, \mathrm{P}, \Phi)\rangle\rangle$ (in Richtung der Kanalmitte) und die axiale Kraftdichte $\langle\langle F_z(\rho, \mathrm{P}, \Phi)\rangle\rangle$ (in Kanalrichtung) der Lorentzkraft bezogen auf den Kanalumfang in Zylindergeometrie die folgenden Zusammenhänge:

$$\langle\langle F_r(\rho, \mathrm{P}, \Phi)\rangle\rangle = \frac{1}{4}\mu I_0{}^2 K_1(\mathrm{P})^2 \frac{[K_0(\rho)I_1(\rho)+K_1(\rho)I_0(\rho)]^2}{[K_0(\mathrm{P})I_1(\mathrm{P})+K_1(\mathrm{P})I_0(\mathrm{P})]^2} \cdot \frac{\frac{1}{\rho}\mathrm{Re}\left[\frac{\left(\overline{\Phi}^2-\Phi^2\right)}{\overline{\Phi}}\Psi\left(\rho\Phi,\frac{\Phi}{\overline{\Phi}}\right)\right]}{|[K_0(\rho)I_1(\rho\Phi)+K_1(\rho)I_0(\rho\Phi)\Phi]|^2} \tag{60}$$

und

$$\langle\langle F_z(\rho, \mathrm{P}, \Phi)\rangle\rangle = \frac{1}{4}\mu I_0{}^2 K_1(\mathrm{P})^2 \frac{[K_0(\rho)I_1(\rho)+K_1(\rho)I_0(\rho)]^2}{[K_0(\mathrm{P})I_1(\mathrm{P})+K_1(\mathrm{P})I_0(\mathrm{P})]^2} \frac{-2\,\mathrm{Im}\left(\Phi I_0(\rho\Phi)\cdot I_1(\rho\overline{\Phi})\right)}{|[K_0(\rho)I_1(\rho\Phi)+K_1(\rho)I_0(\rho\Phi)\Phi]|^2} \cdot$$

$$\tag{61}$$

Hierbei sind die Größen P, $\rho$ und $\Phi$ wie folgt definiert:

$$\rho = k_z r_i \tag{62}$$

$$\mathrm{P} = k_z R \tag{63}$$

$$\Phi = \Phi(\Theta) = \frac{k_r}{k_z} = \frac{1}{\sqrt{2}}\left(\sqrt{\kappa+1} - i\sqrt{\kappa-1}\right) = \frac{1}{\sqrt{2}}\left(\sqrt{\sqrt{1+\Theta^4}+1} - i\sqrt{\sqrt{1+\Theta^4}-1}\right) \tag{64}$$

und die Funktion $\Psi(x, \beta)$ ist durch das Integral

$$\Psi(x,\beta) = \int_{s=0}^{x} s\, I_0(s) I_1(\beta s)\, ds \tag{65}$$

gegeben.

Die Frequenzabhängigkeit und die räumliche Struktur der Gleichungen (60) und (61) werden jeweils durch die Bruchterme am Ende der Gleichungen ausgedrückt, die nur von den beiden Parametern $\rho$ und $\Theta$ abhängen:

$$Z_{rc}(\rho,\Theta) = \frac{\frac{1}{\rho}\mathrm{Re}\left[\frac{\left(\overline{\Phi}^2 - \Phi^2\right)}{\overline{\Phi}}\Psi\left(\rho\overline{\Phi},\frac{\Phi}{\overline{\Phi}}\right)\right]}{|[K_0(\rho)I_1(\rho\Phi) + K_1(\rho)I_0(\rho\Phi)\Phi]|^2} \tag{66}$$

$$Z_{zc}(\rho,\Theta) = \frac{-2\,\mathrm{Im}\left(\Phi I_0(\rho\Phi)\cdot I_1(\rho\overline{\Phi})\right)}{|[K_0(\rho)I_1(\rho\Phi) + K_1(\rho)I_0(\rho\Phi)\Phi]|^2} \tag{67}$$

Für große Radien R und $r_i$, d.h. für große Kanalradien bzw. -querschnitte, gehen die Beziehungen (60) und (61) in (54) und (55) über.

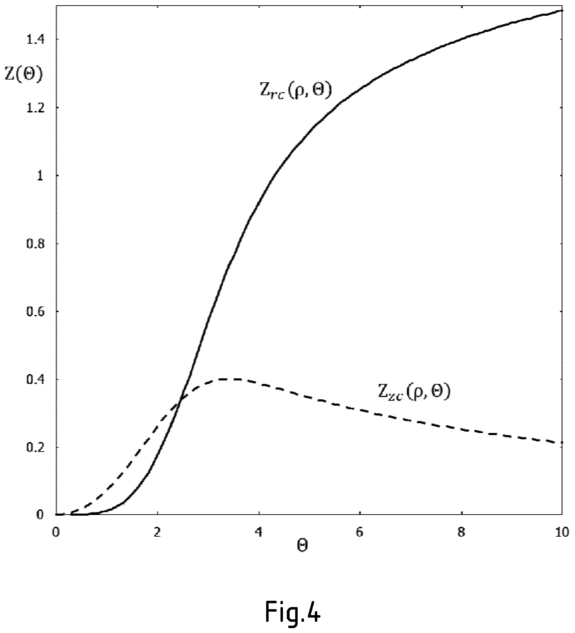

In Fig. 4 sind die Funktionen $Z_{rc}(\rho = 0.88, \Theta)$ und $Z_{zc}(\rho = 0.88, \Theta)$ aus Gleichungen (66) und (67) gegen den Parameter $\Theta$ aufgetragen. Für die Parameter $r_i$, R, L und f wurden folgende Werte angenommen, die einem realistischen Ausführungsbeispiel entsprechen:

$r_i$ = 0.07 m
R = 0.1 m
L = 0.5 m
f = 0 - 400 Hz

Aus den angenommenen Werten ergibt sich auch der in Fig. 4 gewählte Wert von 0.88 für $\rho$.

Fig. 4 zeigt damit die $\Theta$- bzw. Frequenzabhängigkeit $Z_{rc}$ für die radiale Kraftdichte und die $\Theta$- bzw. Frequenzabhängigkeit $Z_{zc}$ für die axiale Kraftdichte. Wie der Vergleich mit Fig. 3 zeigt, stimmen die Frequenzabhängigkeiten für die radiale und axiale Kraftdicke qualitativ mit den gemittelten radialen und axialen Lorentzkraftkomponenten aus dem planaren Fall überein. Insbesondere zeigt die Frequenzabhängigkeit der axialen Kraftdichte $Z_{zc}$ ein Maximum bei etwa 2 und nimmt zu größeren $\Theta$ wieder ab.

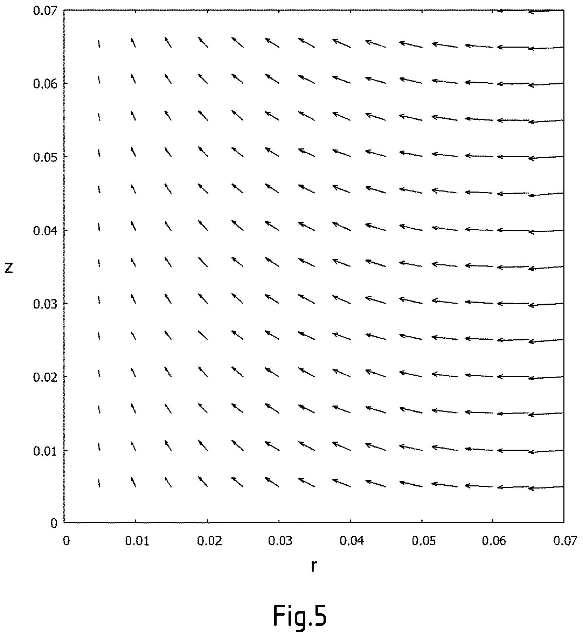

Fig. 5 zeigt in Vektorfeld-Darstellung die Richtung und Stärke des Kraftfelds, die sich aus der Überlagerung der gemittelten radialen und axialen Kraftdichten $\langle F_r(r)\rangle$ und $\langle F_z(r)\rangle$ zweier gegenläufiger Wanderfelder für die oben genannten Werte für $r_i$, R, L und die beiden Frequenzen $f_1$ = 60Hz und $f_1$ = 400Hz und die Stromstärken $I_1 = I_0$ und $I_2$ = $1.14 \cdot I_0$ ergeben. Die mit "r" bezeichnete Achse kennzeichnet die radiale Position, wobei r = 0 m der Kanalmitte und r = 0.07 m dem Rand des Kanals entspricht. Die mit "z" bezeichnete Achse kennzeichnet die axiale Position im Kanal (in m). Die Richtung der Pfeile zeigt die lokale Richtung des Kraftfelds und deren Länge die lokale Kraftfeldstärke an, wobei letztere - der besseren Sichtbarkeit halber - logarithmisch skaliert ist.

Wie Fig. 5 zeigt, weist das Kraftfeld in der Mitte des Kanals (kleines r) eine signifikante Axialkomponente auf, so dass der Transport der Flüssigkeit durch den Kanal gewährleistet wird. Im Randbereich des Kanals (großes r) dominiert hingegen die Radialkomponente, so dass die Kraft im Wesentlichen zur Kanalmitte gerichtet ist, wodurch der Leenov-Kolin-Effekt verstärkt wird. Im Randbereich (in Fig. 5 bei r zwischen 0.065 und 0.07 m) kann sich Richtung der axialen Kraftkomponente sogar umkehren, so dass eine randseitige Gegenströmung erreicht werden kann, mit der Verunreinigungspartikel entgegen der Hauptströmungsrichtung im Kanal abtransportiert werden können.

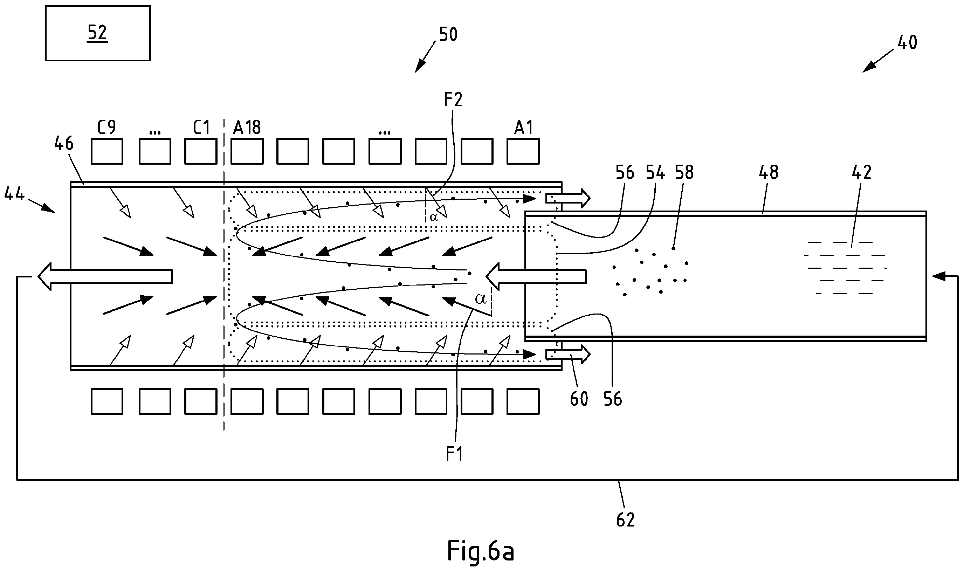

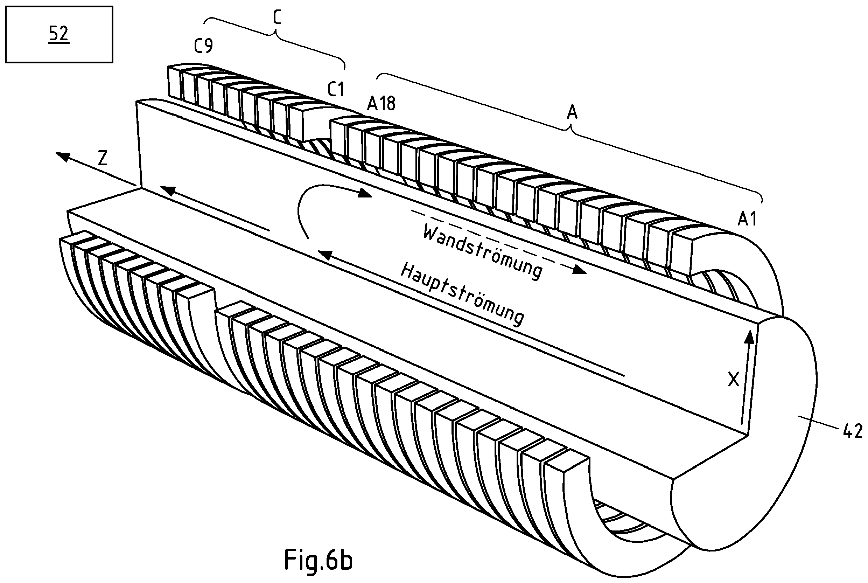

Die Fig. 6a-b zeigen nun ein erstes Ausführungsbeispiel der erfindungsgemäßen Vorrichtung und des erfindungsgemäßen Verfahrens. Fig. 6a zeigt eine schematische Schnittansicht und Fig. 6b eine perspektivische Teilschnittansicht der Vorrichtung.

Die Vorrichtung 40 zur Reinigung einer elektrisch leitenden Flüssigkeit 42 ist vorwiegend zur Reinigung einer Aluminiumschmelze ausgelegt. Die Vorrichtung weist einen Kanal 44 auf, der durch ein Keramikrohr 46 gebildet ist. Das Keramikrohr 46 weist eine gute thermische und chemische Beständigkeit auf, so dass die Aluminiumschmelze durch den Kanal 44 geleitet werden kann. Der Kanal 44 kann beispielsweise einen Innendurchmesser von 100 mm aufweisen, der sich als gut geeignet zur Förderung von Aluminiumschmelzen herausgestellt hat. Weiterhin weist die Vorrichtung 40 noch ein Zuleitungsrohr 48 auf, durch das die Aluminiumschmelze in den Kanal 44 geleitet wird.

Um den Kanal 44 ist eine Spulenanordnung 50 mit zwei Spulensätzen A und C mit mehreren Spulen A1 - A18 und C1 - C9 vorgesehen. Bei den Spulen A1 - A18 kann es sich um 18 separate Spulen handeln. Alternativ kann es sich auch um weniger, beispielsweise um sechs Spulen handeln, wobei die Wicklungen A1, A7 und A13 zur ersten, A2, A8 und A14 zur zweiten Spule etc. gehören. Weiterhin können für den Spulensatz A auch nur drei Spulen eingesetzt werden, wobei die Wicklungen A1, A4, A7, A10 etc. zur ersten Spule, die Wicklungen A2, A5, A8, A11 etc. zur zweiten Spule gehören etc. und wobei die Wicklungen A1 - A3, A7 - A9 etc. jeweils im Uhrzeigersinn und die Wicklungen A4 - A6, A10 - A12 etc. jeweils gegen den Uhrzeigersinn um den Kanal gewickelt sind.

Die Spulen C1 - C9 sind stromabwärts der Spulen A1 - A18 angeordnet. Die einzelnen Spulen der Spulenanordnung 50 sind an eine Elektronik 52 angeschlossen, über die die Spulen mit elektrischen Strömen beaufschlagt werden können.

Die Elektronik 52 ist dazu eingerichtet, mehrere Spulen der Spulenanordnung 50 im Betrieb derart mit elektrischen Strömen zu beaufschlagen, dass in dem Kanal 44 zwei verschiedene elektromagnetische Wanderfelder erzeugt werden, und zwar ein erstes Wanderfeld mit einer ersten Grundfrequenz und ein zweites Wanderfeld mit einer zweiten Grundfrequenz, die größer ist als die erste Grundfrequenz des ersten Wanderfelds.

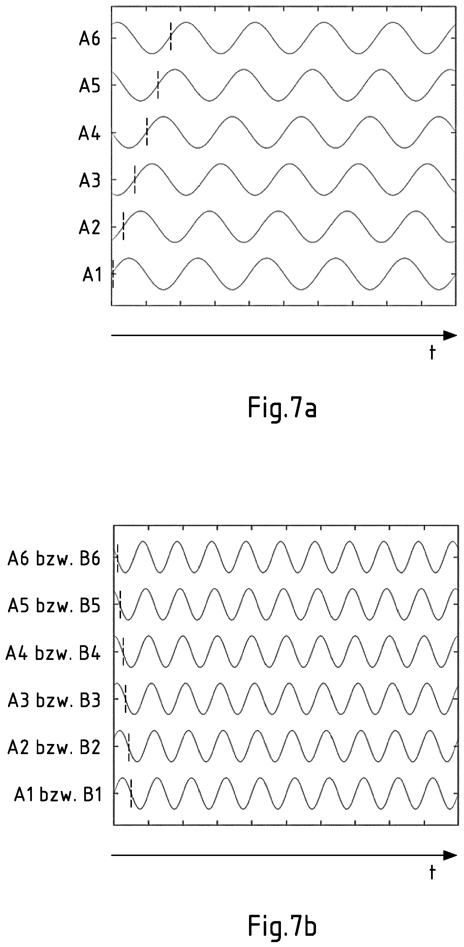

Zur Erzeugung des ersten Wanderfelds ist die Elektronik 52 dazu eingerichtet, die Spulen A1 - A18 mit phasenverschobenen Strömen eines Mehrphasenstroms zu beaufschlagen. Fig. 7a zeigt exemplarisch die entsprechenden Ströme als Funktion der Zeit für die ersten Spulen A1 - A6. Die Ströme sind sinusartig und weisen eine Grundfrequenz $f1$ von 100 Hz auf. Die senkrechten gestrichelten Linien kennzeichnen jeweils einen Nulldurchgang der sinusartigen Ströme, wodurch die Phasenverschiebung von jeweils +60° zwischen den einzelnen Strömen sichtbar wird. Wie zuvor anhand Fig. 1 beschrieben, entsteht dadurch im Kanal 44 ein erstes Wanderfeld, das sich in einer Richtung durch den Kanal 44 bewegt, und zwar in Fig. 6a von rechts nach links. Aufgrund der Phasenverschiebung von jeweils 60° entspricht die Wellenlänge $L1$ des ersten Wanderfelds dem Abstand von sechs Spulen (z.B. dem Abstand zwischen Spule A1 und A7), da die Phasenverschiebung nach sechs Spulen einer vollen Periode von 360° entspricht.

Zur Erzeugung des zweiten Wanderfelds ist die Elektronik 52 weiterhin dazu eingerichtet, die Spulen A1 - A18 mit phasenverschobenen Strömen eines Mehrphasenstroms mit höherer Grundfrequenz $f2$ zu beaufschlagen. Fig. 7b zeigt exemplarisch die entsprechenden Ströme als Funktion der Zeit für die ersten Spulen A1 - A6. Die Ströme sind wiederum sinusartig und weisen eine Grundfrequenz $f2$ von 200 Hz auf. Die senkrechten gestrichelten Linien kennzeichnen jeweils einen Nulldurchgang der sinusartigen Ströme, wodurch die Phasenverschiebung von jeweils -30° zwischen den einzelnen Strömen sichtbar wird. Wie zuvor anhand Fig. 1 beschrieben, entsteht dadurch im Kanal 44 ein zweites Wanderfeld. Aufgrund der negativen Phasenverschiebung bewegt sich das zweite Wanderfeld in entgegengesetzter Richtung durch den Kanal 44 wie das erste Wanderfeld, d.h. in Fig. 6a von links nach rechts. Weiterhin ist die Wellenlänge $L2$ des zweiten Wanderfelds wegen der betragsmäßig kleineren Phasenverschiebung der Ströme doppelt so lang wie die Wellenlänge $L1$ des ersten Wanderfelds. Sie entspricht dem Abstand von zwölf Spulen (z.B. dem Abstand zwischen Spule A1 und Spule A13), da die Phasenverschiebung nach zwölf Spulen einer vollen Periode von 360° entspricht.

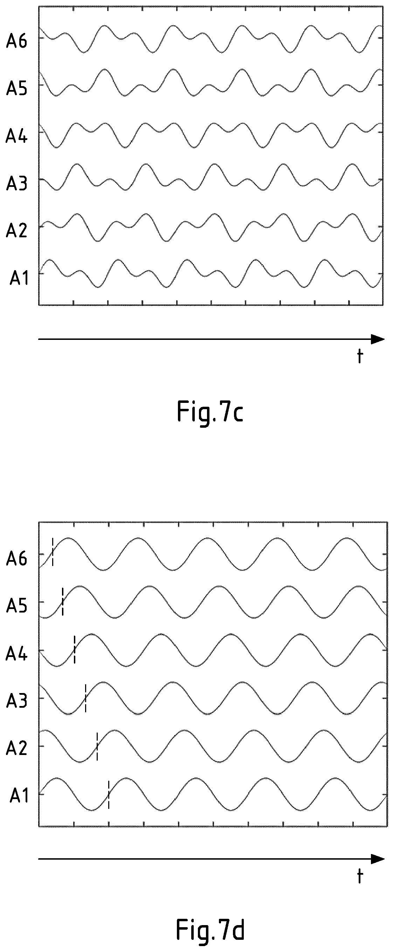

Zur Erzeugung des ersten und zweiten Wanderfelds können die in Fig. 7a und 7b dargestellten Ströme abwechselnd auf die Spulen A1 - A18 beaufschlagt werden. Alternativ kann die Elektronik 52 auch eine Überlagerung der jeweiligen Ströme zur Erzeugung des ersten und zweiten Wanderfelds auf die jeweiligen Spulen beaufschlagen. Fig. 7c zeigt für jede der Spulen A1 - A6 eine Überlagerung der jeweiligen Ströme aus Fig. 7a und Fig. 7b.

Aufgrund seiner höheren Grundfrequenz $f2$ dringt das zweite Wanderfeld nur sehr wenig in die im Kanal 44 geführte Aluminiumschmelze 42 ein und bewirkt - wie zuvor anhand der Fig. 1 und der nachfolgenden Berechnung erläutert - Lorentzkräfte F2, die im Randbereich des Kanals 44 auf die Aluminiumschmelze 42 wirken.

Das erste Wanderfeld dringt aufgrund seiner geringeren Grundfrequenz $f1$ demgegenüber tiefer in die im Kanal 44 geführte Aluminiumschmelze 42 ein und bewirkt entsprechend Lorentzkräfte F1, die weiter im Inneren des Kanals 44 auf die Aluminiumschmelze 42 wirken.

Die Spulenanordnung 50 und die Elektronik 52 sind so eingerichtet, dass das Produkt aus der Quadratwurzel der Frequenz $f1$ des ersten Wanderfelds und der Wellenlänge $L1$ des ersten Wanderfelds kleiner ist als das Produkt aus der Quadratwurzel der Frequenz $f2$ des zweiten Wanderfelds und der Wellenlänge $L2$ des zweiten Wanderfelds. Insbesondere sind die Spulenanordnung 50 und die Elektronik 52 so eingerichtet, dass der zuvor erläuterte Parameter Θ für das erste Wanderfeld im Bereich 1 bis 3 und für das zweite Wanderfeld bei mehr als 3, vorzugsweise mehr als 4 liegt.

Dies führt einerseits dazu, dass die gemittelte Richtung der Lorentzkräfte F1 des ersten Wanderfelds eine große Komponente in axialer Richtung aufweist (vorzugsweise mit einem Winkel α zur Normalen der Kanalwandung von > 45°), so dass im Inneren des Kanals 44 eine effektive axiale Strömung und damit ein Transport der Aluminiumschmelze 42 bewirkt wird. Andererseits führt dies dazu, dass die gemittelte Richtung der Lorentzkräfte F2 des zweiten Wanderfelds eine große Komponente in radialer Richtung aufweist (vorzugsweise mit einem Winkel α < 45°), so dass im Randbereich des Kanals 44 zum einen eine geringere axiale Strömung auftritt und zum anderen der Leenov-Kolin-Effekt verstärkt wird.

Im Ergebnis bilden sich dadurch zwei Strömungsbereiche 54, 56 aus, wobei der erste Strömungsbereich 54 im Inneren des Kanals 44 einen sicheren Transport der Aluminiumschmelze 42 durch den Kanal 44 sicherstellt, während der zweite Strömungsbereich 56 im Randbereich des Kanals 44 eine effektive Filterung der Aluminiumschmelze 42 bewirkt.

Diese Filterwirkung wird im Folgenden anhand der Fig. 6a beschrieben. Die über das Zuleitungsrohr 48 in den Kanal 44 eingeleitete Aluminiumschmelze 42 weist nichtleitende Verunreinigungspartikel 58 wie zum Beispiel Oxidpartikel auf. Diese werden zusammen mit der Aluminiumschmelze 42 durch den Kanal 44 transportiert. Die Lorentzkräfte F1 bewirken eine Druckkraft auf die nichtleitenden Verunreinigungspartikel 58, die diese nach außen treibt (Leenov-Kolin-Effekt). Dieser Effekt wird durch die starke Radialkomponente der Lorentzkräfte F2 im zweiten Strömungsbereich 56 noch verstärkt.

Die in den zweiten Strömungsbereich 56 gelangten Verunreinigungspartikel 58 werden dann dort durch die große Radialkomponente der Lorentzkräfte F2 an die Kanalwandung gedrückt und durch die zur Hauptströmung im ersten Strömungsbereich 54 gegenläufige Strömung abtransportiert. Zu diesem Zweck weist die Vorrichtung 40 beispielsweise einen ringförmigen Auslass 60 als Abführung am Kanal 44 auf, durch den die partikelreiche Aluminiumschmelze abgeführt werden kann. Alternativ oder zusätzlich können im Wandungsbereich des Kanals auch eine Beschichtung oder eine Hülse aus Aluminiumoxid vorgesehen sein, die die Verunreinigungspartikel einfangen und festhalten.

Auf diese Weise werden die Verunreinigungspartikel 58 von der Aluminiumschmelze im Inneren des Kanals 44 getrennt, so dass die aus dem Kanal 44 austretende Aluminiumschmelze gesäubert ist.

Die Elektronik 52 ist weiterhin dazu eingerichtet, die stromabwärts der Spulen A1 - A18 angeordneten Spulen C1 - C9 zur Erzeugung eines dritten Wanderfelds mit phasenverschobenen Strömen eines Mehrphasenstroms zu beaufschlagen. Fig. 7d zeigt exemplarisch die entsprechenden Ströme als Funktion der Zeit für die Spulen C1 - C6. Die Ströme sind wie beim ersten Wanderfeld sinusartig und weisen eine Grundfrequenz $f3$ von 100 Hz auf. Die senkrechten gestrichelten Linien in Fig. 7d kennzeichnen jeweils einen Nulldurchgang der Ströme, wodurch die Phasenverschiebung von jeweils -60° zwischen den einzelnen Strömen sichtbar wird. Die Phasenverschiebung der Ströme zur Erzeugung des dritten Wanderfelds ist also betragsmäßig so groß wie bei den Strömen zur Erzeugung des ersten Wanderfelds, jedoch mit umgekehrtem Vorzeichen. Wie zuvor anhand Fig. 1 beschrieben, entsteht dadurch im Kanal 44 ein drittes Wanderfeld, das aufgrund der gleichen Frequenz ebenso weit in die Metallschmelze 42 eindringt wie das erste Wanderfeld, sich jedoch in entgegengesetzter Richtung durch den Kanal 44 bewegt, in Fig. 4a also von links nach rechts. Die durch das dritte Wanderfeld bewirkten Lorentzkräfte F3 führen damit zu einer Abbremsung der Strömung im ersten Strömungsbereich 54, so dass die Aluminiumschmelze 42 länger im Kanal 44 verbleibt und ein besserer Reinigungseffekt erzielt werden kann.

Um den Reinigungseffekt weiter zu verstärken, kann die Aluminiumschmelze auch mehrfach durch den Kanal 44 geführt werden. Zu diesem Zweck kann die Vorrichtung 40 eine Rückleitung 62 aufweisen, über die die gereinigte Aluminiumschmelze wieder an den Anfang des Kanals 44 geführt wird.

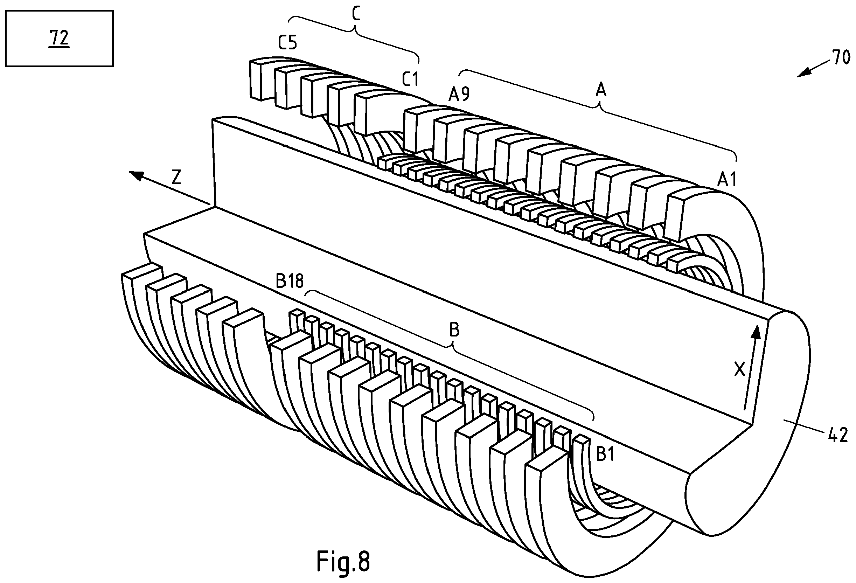

Fig. 8 zeigt eine schematische Darstellung eines alternativen Ausführungsbeispiels der erfindungsgemäßen Vorrichtung und des erfindungsgemäßen Verfahrens. Die Vorrichtung 70 entspricht im Aufbau im Wesentlichen der Vorrichtung 40, so dass auf die Funktionsweise im Wesentlichen auf die obige Beschreibung verwiesen wird. Gleiche Komponenten in Fig. 8 und Fig. 6a-b sind mit gleichen Bezugszeichen versehen.

Die Vorrichtung 70 unterscheidet sich von der Vorrichtung 40 lediglich dadurch, dass anstelle der Spulen A1 - A18 zur Erzeugung des ersten und zweiten Wanderfelds bei der Vorrichtung 70 separate Spulengruppen A und B für die Erzeugung des ersten und zweiten Wanderfelds vorgesehen sind, und zwar mit Spulen A1 - A9 zur Erzeugung des ersten Wanderfelds und mit Spulen B1 - B18 zur Erzeugung des zweiten Wanderfelds. Die Spulen A1 - A9 sind um die Spulen B1 - B18 herum angeordnet.

Die Elektronik 72 der Vorrichtung 70 ist entsprechend dazu eingerichtet, die Spulen A1 - A9 mit Strömen zur Erzeugung des ersten Wanderfelds zu beaufschlagen, wobei die Ströme für die ersten sechs Spulen A1 - A6 in Fig. 7a dargestellt sind. Die Elektronik 72 der Vorrichtung 70 ist weiterhin dazu eingerichtet, die Spulen B1 - B18 mit Strömen zur Erzeugung des zweiten Wanderfelds zu beaufschlagen, wobei die Ströme für die ersten sechs Spulen B1 - B6 in Fig. 7b dargestellt sind.

Die Spulengruppe C weist bei der Vorrichtung 70 nur fünf Spulen auf, kann aber wie in Fig. 6b dargestellt auch mehr Spulen aufweisen.

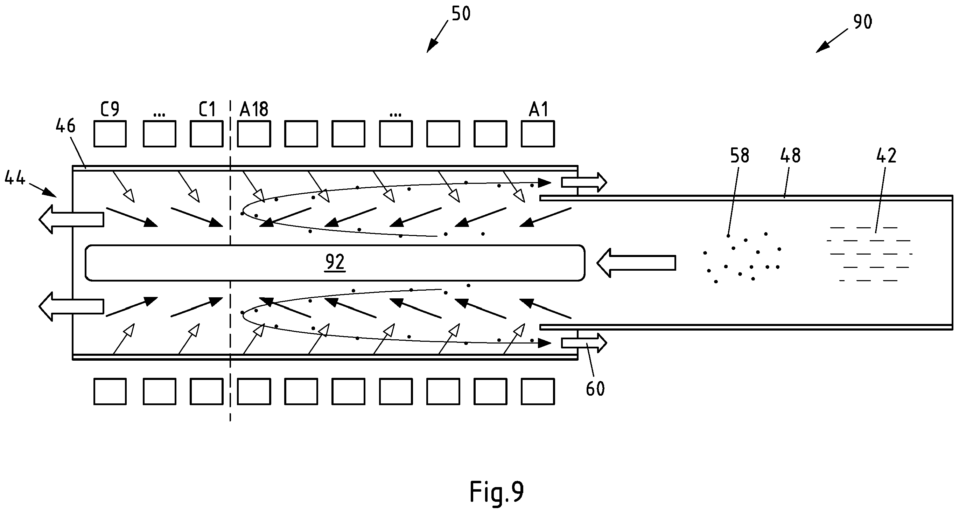

Fig. 9 zeigt eine schematische Schnittansicht eines weiteren alternativen Ausführungsbeispiels der erfindungsgemäßen Vorrichtung und des erfindungsgemäßen Verfahrens. Die Vorrichtung 90 entspricht im Aufbau im Wesentlichen der Vorrichtung 40, so dass hinsichtlich des Aufbaus und der Funktionsweise im Wesentlichen auf die obige Beschreibung verwiesen wird. Gleiche Komponenten in Fig. 9 und Fig. 6a-b sind mit gleichen Bezugszeichen versehen.

Die Vorrichtung 90 unterscheidet sich von der Vorrichtung 40 lediglich dadurch, dass innerhalb des Kanals 44 ein zylindrischer Strömungskörper 92 angeordnet ist, so dass die Aluminiumschmelze um diesen herum strömt. Auf diese Weise werden die Aluminiumschmelze und damit auch die Verunreinigungspartikel im Kanal 44 aus dem Bereich der Kanalmitte, in dem die Lorenzkraft betragsmäßig am schwächsten ist, weiter nach außen geführt, so dass eine betragsmäßig größere Lorentzkraft auf die Schmelze wirkt und diese einerseits zuverlässig durch den Kanal transportiert wird und andererseits ein ausreichend starker Leenov-Koolin-Effekt auftritt, um die Verunreinigungspartikel in den Randbereich des Kanals zu führen. Diese Ausführungsform ist insbesondere bei großen Kanalquerschnitten vorteilhaft.

Im Folgenden wird nun noch ein Beispiel zur Auslegung geeigneter Spulensätze A und B für die in Fig. 8 dargestellte Vorrichtung 70 beschrieben:
Für den zylindrischen Kanal 44 sollen zwei Spulensätze A und B so ausgelegt werden, dass die Kräfte im Inneren des Kanals die Aluminiumschmelze in Vorwärtsrichtung fördern, während im Randbereich eine Zone mit rückwärts gerichteten Kräften entsteht.

Der Kanaldurchmesser bestimmt den Radius $r_i$. Für $r_i$ wird ein Wert von 7 cm, d.h. 0.07m, angenommen. Für die Spulensätze sind dann die Wellenlängen $L_1$ und $L_2$ der Wanderfelder, die Spulenradien $R_1$ und $R_2$ und die Frequenzen $f_1$ und $f_2$ und die Spulenstromdichten $I_1$ und $I_2$ festzulegen. Die Dimension von $I_1$ und $I_2$ ist der Strom pro Einzelleiter multipliziert mit der Gesamtwindungszahl in allen Teilspulen dividiert durch die Länge der Spule in z-Richtung.

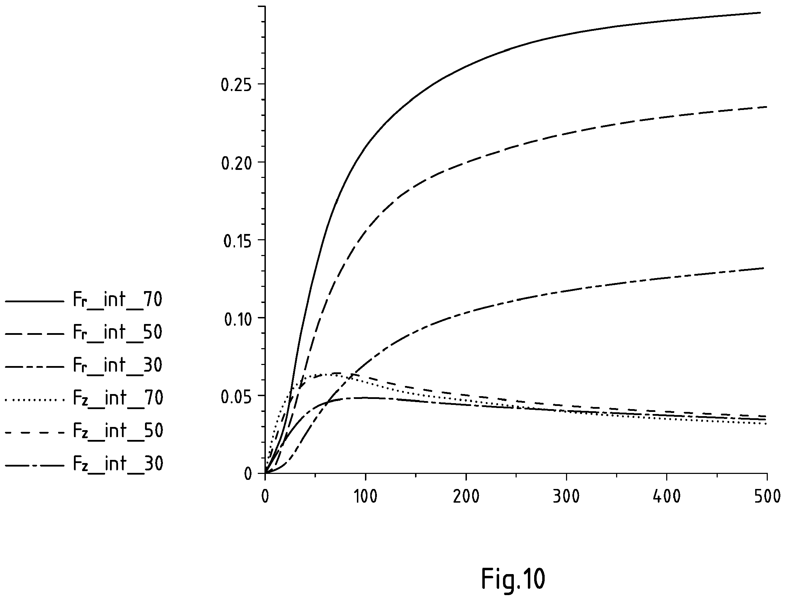

Die Wahl der Wellenlänge erfolgt anhand von Fig. 10, in der die integrierten Axial- und Radialkräfte Fz_int, Fr_int entsprechend Gleichung den Gleichungen (60) und (61) für Wellenlängen von 30cm, 50cm und 70cm dargestellt sind. Die Verläufe der Axialkräfte für Wellenlängen von 50cm und 70cm unterscheiden sich nur unwesentlich, bei 30 cm ist das Maximum zu höheren Frequenzen verschoben und nur schwach ausgeprägt. Allerdings fällt die Radialkomponente für eine Wellenlänge von 30cm deutlich schwächer aus, so dass die Filterwirkung reduziert wird. Es wird daher sowohl für $L_1$ als auch für $L_2$ eine Länge von 50 cm gewählt.

Die Radien der Spulen werden zu $R_1 = R_2 = 10$cm festgelegt. Das niederfrequente Wanderfeld soll im Maximum des Vortriebs betrieben werden. Das ist nach dem Diagramm $f_1 = 60$Hz. Hieraus resultiert eine Eindringtiefe von 35mm. Das im Randbereich wirksame gegenläufige Feld soll eine deutlich niedrigere Eindringtiefe haben. Bei einem Wert von $f_2 = 400$Hz beträgt diese nur noch 13.5mm.

Die beiden Wanderfelder sollen von der Stärke so abgestimmt sein, dass in der Gesamtbilanz die Vorwärtskomponente deutlich überwiegt. Dies kann erreicht werden, wenn in dem Beispiel $I_1 = I_0$ und $I_2 = 1.14 \cdot I_0$ gewählt werden. Dann beträgt die gesamte Axialkraft nur noch etwa 20% des Wertes ohne das gegenläufige Feld.

In der oben beschriebenen Fig. 5 sind die Kraftkomponenten für dieses Ausführungsbeispiel als Vektorfeld dargestellt. Wie die Figur zeigt, ist die Kraftwirkung in der Nähe der Rohrachse nur noch schwach ausgeprägt. Dies ist letztlich eine Konsequenz aus den Gleichungen (57) und (58), die fordern, dass die Lorentzkräfte in der Rohrmitte wegen $I_1 (0) = 0$ verschwinden.

Es ist daher vorteilhaft, die Strömung durch einen geeigneten Strömungskörper wie in Fig. 9 dargestellt nach außen zu drängen, damit die Schmelze weitgehend in den Einflussbereich der Lorentzkräfte gelangt.

**Patentansprüche**

**1.** Vorrichtung (40, 70) zur Reinigung einer elektrisch leitenden Flüssigkeit (42), insbesondere einer Metallschmelze, von nichtleitenden Verunreinigungen (58),

- mit einem von einer elektrisch leitenden Flüssigkeit (42) durchströmbaren Kanal (44),
- mit einer um den Kanal (44) angeordneten Spulenanordnung (50), die mehrere Spulen (A1 - A18, B1 - B18, C1 - C9) aufweist, und
- mit einer Elektronik (52, 72), um die Spulen (A1 - A18, B1 - B18, C1 - C9) der Spulenanordnung (50) im Betrieb mit elektrischen Strömen zu beaufschlagen,
**dadurch gekennzeichnet,**
- **dass** die Elektronik (52, 72) dazu eingerichtet ist, mehrere Spulen (A1 - A18, B1 - B18, C1 - C9) der Spulenanordnung (50) im Betrieb derart mit elektrischen Strömen zu beaufschlagen, dass in dem Kanal (44) ein erstes in Kanalrichtung durch den Kanal (44) laufendes elektromagnetisches Wanderfeld erzeugt wird und dass in dem Kanal (44) zusätzlich zu dem ersten elektromagnetischen Wanderfeld ein zweites in Kanalrichtung durch den Kanal (44) laufendes elektromagnetisches Wanderfeld erzeugt wird.

**2.** Vorrichtung nach Anspruch 1,
**dadurch gekennzeichnet, dass**
die Elektronik (52, 72) dazu eingerichtet ist, mehrere Spulen (A1 - A18, B1 - B18, C1 - C9) der Spulenanordnung (50) im Betrieb derart mit elektrischen Strömen zu beaufschlagen, dass als erstes in Kanalrichtung durch den Kanal (44) laufendes elektromagnetisches Wanderfeld ein elektromagnetisches Wanderfeld mit einer ersten Grundfrequenz (f1) erzeugt wird und dass als zweites in Kanalrichtung durch den Kanal (44) laufendes elektromagnetisches Wanderfeld ein elektromagnetisches Wanderfeld mit einer gegenüber der ersten Grundfrequenz (f1) höheren zweiten Grundfrequenz (f2) erzeugt wird.

**3.** Vorrichtung nach Anspruch 1 oder 2,
**dadurch gekennzeichnet, dass** die Elektronik (52, 72) dazu eingerichtet ist, die Spulen (A1 - A18, B1 - B18, C1 - C9) der Spulenanordnung (50) derart zu beaufschlagen, dass das erste Wanderfeld und das zweite Wanderfeld in entgegengesetzten Richtungen durch den Kanal (44) laufen.

4. Vorrichtung nach einem der Ansprüche 1 bis 3,
   **dadurch gekennzeichnet, dass** die Grundfrequenz (f1) des ersten elektromagnetischen Wanderfelds im Bereich 1 bis 1000 Hz liegt und die Grundfrequenz (f2) des zweiten elektromagnetischen Wanderfelds im Bereich 30 bis 20000 Hz liegt.

5. Vorrichtung nach einem der Ansprüche 1 bis 4,
   **dadurch gekennzeichnet, dass** das Produkt aus der Quadratwurzel der Frequenz des ersten Wanderfelds und der Wellenlänge des ersten Wanderfelds $(\sqrt{f_1} \cdot L_1)$ kleiner ist als das Produkt aus der Quadratwurzel der Frequenz des zweiten Wanderfelds und der Wellenlänge des zweiten Wanderfelds $(\sqrt{f_2} \cdot L_2)$.

6. Vorrichtung nach einem der Ansprüche 1 bis 5,
   **dadurch gekennzeichnet, dass** die Elektronik (52, 72) dazu eingerichtet ist, mehrere Spulen (C1 - C9) der Spulenanordnung (50) im Betrieb derart mit elektrischen Strömen zu beaufschlagen, dass stromabwärts des ersten magnetischen Wanderfelds ein drittes durch den Kanal (44) laufendes elektromagnetisches Wanderfeld erzeugt wird, wobei das erste Wanderfeld und das dritte Wanderfeld in entgegengesetzten Richtungen durch den Kanal (44) laufen.

7. Vorrichtung nach einem der Ansprüche 1 bis 6,
   **dadurch gekennzeichnet, dass** die Spulen (A1 - A9, B1 - B18, C1 - C9) der Spulenanordnung in mehreren Spulensätzen (A, B, C) gruppiert sind, wobei ein erster Spulensatz (A) mit Spulen (A1 - A9) zur Erzeugung des ersten elektromagnetischen Wanderfelds, ein zweiter Spulensatz (B) mit Spulen (B1 - B18) zur Erzeugung des zweiten elektromagnetischen Wanderfelds und optional ein dritter Spulensatz (C) mit Spulen (C1 - C9) zur Erzeugung des dritten elektromagnetischen Wanderfelds vorgesehen sind.

8. Vorrichtung nach einem der Ansprüche 1 bis 7,
   **dadurch gekennzeichnet, dass** die Elektronik (52, 72) dazu eingerichtet ist, eine oder mehrere Spulen (A1 - A18, B1 - B18, C1 - C9) der Spulenanordnung (50) im Betrieb mit einem Gleichstrom bzw. einem Gleichstromanteil zu beaufschlagen.

9. Vorrichtung nach einem der Ansprüche 1 bis 8,
   **dadurch gekennzeichnet, dass** im Randbereich des Kanals (44) eine Abführung (60) angeordnet ist, um im Randbereich des Kanals (44) strömende Flüssigkeit (42) aus dem Kanal (44) abzuleiten.

10. Vorrichtung nach einem der Ansprüche 1 bis 9,
    **dadurch gekennzeichnet, dass** der Kanal (44) im Kreislauf betreibbar ist, so dass die elektrisch leitende Flüssigkeit (42) mehrfach nacheinander durch das erste und zweite Wanderfeld geführt werden kann.

11. Verfahren zur Reinigung einer elektrisch leitenden Flüssigkeit (42) von nichtleitenden Verunreinigungen (58) in einem von der Flüssigkeit (42) durchströmten Kanal (44), insbesondere unter Verwendung einer Vorrichtung (40, 70) nach einem der Ansprüche 1 bis 10,

    - bei dem in dem Kanal (44) ein erstes in Kanalrichtung durch den Kanal laufendes elektromagnetisches Wanderfeld erzeugt wird,
    **dadurch gekennzeichnet,**
    - **dass** in dem Kanal (44) zusätzlich zu dem ersten elektromagnetischen Wanderfeld ein zweites in Kanalrichtung durch den Kanal (44) laufendes elektromagnetisches Wanderfeld erzeugt wird.

12. Verfahren nach Anspruch 11,
    **dadurch gekennzeichnet, dass** als erstes in Kanalrichtung durch den Kanal laufendes elektromagnetisches Wanderfeld ein elektromagnetisches Wanderfeld mit einer ersten Grundfrequenz (f1) und als zweites in Kanalrichtung durch den Kanal (44) laufendes elektromagnetisches Wanderfeld ein elektromagnetisches Wanderfeld mit einer gegenüber der ersten Grundfrequenz (f1) höheren zweiten Grundfrequenz (f2) erzeugt wird.

**13.** Verfahren nach Anspruch 11 oder 12,
**dadurch gekennzeichnet, dass** das erste Wanderfeld und das zweite Wanderfeld in entgegengesetzten Richtungen durch den Kanal (44) laufen.

**14.** Verfahren nach einem der Ansprüche 11 bis 13,
**dadurch gekennzeichnet, dass** die Grundfrequenz (f1) des ersten elektromagnetischen Wanderfelds im Bereich 1 bis 1000 Hz liegt und die Grundfrequenz (f2) des zweiten elektromagnetischen Wanderfelds im Bereich 30 bis 20000 Hz liegt.

**15.** Verfahren nach einem der Ansprüche 11 bis 14,
**dadurch gekennzeichnet, dass** stromabwärts des ersten magnetischen Wanderfelds ein drittes, durch den Kanal (44) laufendes elektromagnetisches Wanderfeld erzeugt wird, wobei das erste Wanderfeld und das dritte Wanderfeld in entgegengesetzten Richtungen durch den Kanal (44) laufen.

**Claims**

**1.** Device (40, 70) for cleaning an electrically conductive fluid (42), in particular a molten metal, to remove non-conductive impurities (58),

- having a channel (44) able to be flowed through by an electrically conductive fluid (42),
- having a coil arrangement (50) arranged around the channel (44), which has several coils (A1 - A18, B1 - B18, C1 - C9), and
- having an electronics assembly (52, 72) in order to impinge the coils (A1 - A18, B1 - B18, C1 - C9) of the coil arrangement (50) with electrical currents during operation,

**characterised in that**

- the electronics assembly (52, 72) is configured to impinge several coils (A1 - A18, B1 - B18, C1 - C9) of the coil arrangement (50) with electrical currents during operation in such a way that a first electromagnetic travelling field running along the channel through the channel (44) is generated in the channel (44) and that, in addition to the first electromagnetic travelling field, a second electromagnetic travelling field running along the channel through the channel (44) is generated in the channel (44).

**2.** Device according to claim 1,
**characterised in that**
the electronics assembly (52, 72) is configured to impinge several coils (A1 - A18, B1 - B18, C1 - C9) of the coil arrangement (50) with electrical currents during operation in such a way that an electromagnetic travelling field having a first fundamental frequency (f1) is generated as a first electromagnetic travelling field running along the channel through the channel (44) and that an electromagnetic travelling field having a second fundamental frequency (f2) higher compared to the first fundamental frequency (f1) is generated as a second electromagnetic travelling field running along the channel through the channel (44).

**3.** Device according to claim 1 or 2,
**characterised in that**
the electronics assembly (52, 72) is configured to impinge the coils (A1 - A18, B1 - B18, C1 - C9) of the coil arrangement (50) in such a way that the first travelling field and the second travelling field run through the channel (44) in opposite directions.

**4.** Device according to any one of claims 1 to 3,
**characterised in that**
the fundamental frequency (f1) of the first electromagnetic travelling field ranges from 1 to 1,000 Hz and the fundamental frequency (f2) of the second electromagnetic travelling field ranges from 30 to 20,000 Hz.

**5.** Device according to any one of claims 1 to 4,
**characterised in that**
the product of the square root of the frequency of the first travelling field and the wave length of the first travelling field ($\sqrt{f_1} \cdot L_1$) is smaller than the product of the square root of the frequency of the second travelling field and the wave length of the second travelling field ($\sqrt{f_2} \cdot L_2$).

6. Device according to any one of claims 1 to 5,
   **characterised in that**
   the electronics assembly (52, 72) is configured to impinge several coils (C1 - C9) of the coil arrangement (50) with electrical currents during operation in such a way that a third electromagnetic travelling field running through the channel (44) is generated downstream of the first magnetic travelling field, wherein the first travelling field and the third travelling field run through the channel (44) in opposite directions.

7. Device according to any one of claims 1 to 6,
   **characterised in that**
   the coils (A1 - A18, B1 - B18, C1 - C9) of the coil arrangement are grouped into several coil sets (A, B, C), wherein a first coil set (A) having coils (A1 - A9) for generating the first electromagnetic travelling field, a second coil set (B) having coils (B1 - B18) to generate the second electromagnetic travelling field and optionally a third coil set (C) having coils (C1 - C9) to generate the third electromagnetic travelling field are provided.

8. Device according to any one of claims 1 to 7,
   **characterised in that**
   the electronics assembly (52, 72) is configured to impinge one or more coils (A1 - A18, B1 - B18, C1 - C9) of the coil arrangement (50) with a direct current or a direct current component during operation.

9. Device according to any one of claims 1 to 8,
   **characterised in that**
   a discharge (60) is arranged in the edge region of the channel (44) in order to drain fluid (42) flowing in the edge region of the channel (44) from the channel (44).

10. Device according to any one of claims 1 to 9,
    **characterised in that**
    the channel (44) is able to be operated in a cycle such that the electrically conductive fluid (42) can be guided multiple times one after the other through the first and second travelling field.

11. Method for cleaning an electrically conductive fluid (42) of non-conductive impurities (58) in a channel (44) flowed through by the fluid (42), in particular by using a device (40, 70) according to any one of claims 1 to 10,

    - in which a first electromagnetic travelling field running along the channel through the channel is generated in the channel (44),

    **characterised in that**

    - in addition to the first electromagnetic travelling field, a second electromagnetic travelling field running along the channel through the channel (44) is generated in the channel.

12. Method according to claim 11,
    **characterised in that** an electromagnetic travelling field having a first fundamental frequency (f1) is generated as a first electromagnetic travelling field running along the channel through the channel and an electromagnetic travelling field having a second fundamental frequency (f2) higher compared to the first fundamental frequency (f1) is generated as a second electromagnetic travelling field running along the channel through the channel (44).

13. Method according to claim 11 or 12,
    **characterised in that** the first travelling field and the second travelling field run through the channel (44) in opposite directions.

14. Method according to any one of claims 11 to 13,
    **characterised in that** the fundamental frequency (f1) of the first electromagnetic travelling field ranges from 1 to 1,000 Hz and the fundamental frequency (f2) of the second electromagnetic travelling field ranges from 30 to 20,000 Hz.

15. Method according to any one of claims 11 to 14,

**characterised in that** a third electromagnetic travelling field running through the channel (44) is generated downstream of the first magnetic travelling field, wherein the first travelling field and the third travelling field run through the channel (44) in opposite directions.

**Revendications**

1. Dispositif (40, 70) de nettoyage d'un liquide électriquement conducteur (42), en particulier d'un métal en fusion, pour ôter des impuretés non conductrices (58),

   - avec un canal (44) pouvant être traversé par un liquide électriquement conducteur (42),
   - avec un agencement de bobines (50) agencé autour dudit canal (44), cet agencement de bobines (50) présentant plusieurs bobines (A1 - A18, B1 - B18, C1 - C9), et
   - avec une électronique (52, 72) pour appliquer des courants électriques, pendant le fonctionnement, aux bobines (A1 - A18, B1 - B18, C1 - C9) de l'agencement de bobines (50)

   **caractérisé en ce que**

   - l'électronique (52, 72) est conçue pour appliquer des courants électriques, pendant le fonctionnement, à plusieurs bobines (A1 - A18, B1 - B18, C1 - C9) de l'agencement de bobines (50), de telle sorte qu'un premier champ électromagnétique à ondes progressives passant à travers le canal (44) en direction du canal soit produit, et qu'en plus du premier champ électromagnétique à ondes progressives, un deuxième champ électromagnétique à ondes progressives passant à travers le canal (44) en direction du canal soit produit dans le canal (44).

2. Dispositif selon la revendication 1,
   **caractérisé en ce que**
   l'électronique (52, 72) est conçue afin d'appliquer des courants électriques, pendant le fonctionnement, à plusieurs bobines (A1 - A18, B1 - B18, C1 - C9) de l'agencement de bobines (50), de telle sorte que, en tant que premier champ électromagnétique à ondes progressives passant à travers le canal (44) en direction du canal, un champ électromagnétique à ondes progressives avec une première fréquence fondamentale (f1) soit produit et que, en tant que deuxième champ électromagnétique à ondes progressives passant à travers le canal (44) en direction du canal, un champ électromagnétique à ondes progressives avec une deuxième fréquence fondamentale (f2) plus élevée par rapport à la première fréquence fondamentale (f1) soit produit.

3. Dispositif selon la revendication 1 ou 2,
   **caractérisé en ce que**
   l'électronique (52, 72) est conçue afin de solliciter les bobines (A1 - A18, B1 - B18, C1 - C9) de l'agencement de bobines (50) de telle sorte que le premier champ à ondes progressives et le deuxième champ à ondes progressives passent à travers le canal (44) dans des directions opposées.

4. Dispositif selon l'une des revendications 1 à 3,
   **caractérisé en ce que**
   la fréquence fondamentale (f1) du premier champ électromagnétique à ondes progressives se situe dans une plage allant de 1 à 1000 Hz et que la fréquence fondamentale (f2) du deuxième champ électromagnétique à ondes progressives se situe dans une plage allant de 30 à 20 000 Hz.

5. Dispositif selon l'une des revendications 1 à 4,
   **caractérisé en ce que**
   le produit de la racine carrée de la fréquence du premier champ à ondes progressives et de la longueur d'ondes du premier champ à ondes progressives ($\sqrt{f_1} \cdot L_1$) est inférieur au produit de la racine carrée de la fréquence du deuxième champ à ondes progressives et de la longueur d'ondes du deuxième champ à ondes progressives ($\sqrt{f_2} \cdot L_2$).

6. Dispositif selon l'une des revendications 1 à 5,
   **caractérisé en ce que**
   l'électronique (52, 72) est conçue afin d'appliquer des courants électriques, pendant le fonctionnement, à plusieurs bobines (C1 - C9) de l'agencement de bobines (50) de telle sorte que, en aval du premier champ magnétique à ondes progressives, un troisième champ électromagnétique à ondes progressives passant à travers le canal (44) soit produit, où le premier champ à ondes progressives et le troisième champ à ondes progressives passent à travers le canal (44) dans des directions opposées.

7. Dispositif selon l'une des revendications 1 à 6,
**caractérisé en ce que**
les bobines (A1 - A18, B1 - B18, C1 - C9) de l'agencement de bobines (50) sont groupées dans plusieurs ensembles de bobines (A, B, C), où l'on prévoit un premier ensemble de bobines (A) avec des bobines (A1 - A9) pour la production du premier champ électromagnétique à ondes progressives, un deuxième ensemble de bobines (B) avec des bobines (B1 - B18) pour la production du deuxième champ électromagnétique à ondes progressives, et, optionnellement, un troisième ensemble de bobines (C) avec des bobines (Cl - C9) pour la production du troisième champ électromagnétique à ondes progressives.

8. Dispositif selon l'une des revendications 1 à 7,
**caractérisé en ce que**
l'électronique (52, 72) est conçue afin d'appliquer un courant continu ou une proportion de courant continu, pendant le fonctionnement, à plusieurs bobines (A1 - A18, B1 - B18, C1 - C9) de l'agencement de bobines (50).

9. Dispositif selon l'une des revendications 1 à 8,
**caractérisé en ce**
**qu'**une évacuation (60) est agencée dans une partie périphérique du canal (44) afin d'évacuer hors du canal (44) du liquide en circulation dans une partie périphérique du canal (44).

10. Dispositif selon l'une des revendications 1 à 9,
**caractérisé en ce que**
le canal (44) est susceptible d'être exploité en circulation, de sorte que le liquide électriquement conducteur (42) peut être guidé, successivement à plusieurs reprises, à travers le premier et le deuxième champ à ondes progressives.

11. Procédé de nettoyage d'un liquide électriquement conducteur (42) pour ôter des impuretés non conductrices (58) dans un canal (44) dans lequel circule le liquide (42), en particulier en utilisant un dispositif (40, 70) selon l'une des revendications 1 à 10,

- dans lequel, dans le canal (44), un premier champ électromagnétique à ondes progressives passant à travers le canal en direction du canal est produit,

**caractérisé en ce que**

- dans le canal (44), en plus du premier champ électromagnétique à ondes progressives, un deuxième champ électromagnétique à ondes progressives passant à travers le canal (44) en direction du canal est produit.

12. Procédé selon la revendication 11,
**caractérisé en ce que**, en tant que premier champ électromagnétique à ondes progressives passant à travers le canal en direction du canal, un champ électromagnétique à ondes progressives avec une première fréquence fondamentale (f1) est produit et que, en tant que deuxième champ électromagnétique à ondes progressives passant à travers le canal (44) en direction du canal, un champ électromagnétique à ondes progressives avec une deuxième fréquence fondamentale (f2) plus élevée par rapport à la première fréquence fondamentale (f1) est produit.

13. Procédé selon la revendication 11 ou 12,
**caractérisé en ce que** le premier champ à ondes progressives et le deuxième champ à ondes progressives passent à travers le canal (44) dans des directions opposées.

14. Procédé selon l'une des revendications 11 à 13,
**caractérisé en ce que** la fréquence fondamentale (f1) du premier champ électromagnétique à ondes progressives se situe dans une plage allant de 1 à 1 000 Hz et la fréquence fondamentale (f2) du deuxième champ électromagnétique à ondes progressives se situe dans une plage allant de 30 à 20 000 Hz.

15. Procédé selon l'une des revendications 11 à 14,
**caractérisé en ce que**, en aval du premier champ magnétique à ondes progressives, un troisième champ électromagnétique à ondes progressives passant à travers le canal (44) est produit, où le premier champ à ondes progressives et le troisième champ à ondes progressives passent à travers le canal (44) dans des directions opposées.

EP 3 354 367 B1

14

8  10  12                                                    4

0°   60°   120°   180°   240°   300°   360°

18                                                           2

α                                            Fz

Fx                                           16

8a   10a   12a   8b   10b   12b   8c

Fig.1a

B [T]                                                        6

Z (axial) [mm]

Fig.1b

L

Fig.2b

Fig.2a

$< < F_X >_Z >_X$

$< < F_Z >_Z >_X$

Fig.3

$\Theta$

EP 3 354 367 B1

Fig.4

Fig.5

Fig.6a

Fig.6b

Fig.7a

Fig.7b

Fig.7c

Fig.7d

Fig.8

Fig.9

EP 3 354 367 B1

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1913991 A1
- NL 1009031 C2

- US 20080216601 A1

**In der Beschreibung aufgeführte Nicht-Patentliteratur**

- **V.M. KOROVIN.** *Magnetohydrodynamics,* 1988, vol. 24 (2), 160-165